# EUROPEAN PATENT SPECIFICATION

(11) **EP 4 441 175 B1**
(45) Date of publication and mention of the grant of the patent: **27.08.2025**
(21) Application number: 22829702.4
(22) Date of filing: 01.12.2022
(51) Int. Cl.: C10M 155/04, C10M 157/10

(54) **BORONIC ESTER MODIFIED POLYALKYL(METH)ACRYLATE POLYMERS**
BORSÄUREESTER-MODIFIZIERTE POLYALKYL(METH)ACRYLATPOLYMERE
POLYMÈRES DE POLY(MÉTH)ACRYLATE D'ALKYLE MODIFIÉS PAR DES ESTERS BORONIQUES

(30) Priority: 03.12.2021 EP 21212161
(43) Date of publication of application: 09.10.2024
(73) Proprietor: Evonik Operations GmbH, 45128 Essen (DE)
(72) Inventor: SCHÖLLER, Katrin, 65929 Frankfurt (DE); MAIER, Stefan Karl, 64372 Ober-Ramstadt (DE); ZIEGLER, Fabian, 64289 Darmstadt (DE); BESTGEN, Sebastian, 97080 Würzburg (DE)
(74) Representative: Evonik Patent Association
(86) International application number: PCT/EP2022/083968
(87) International publication number: WO 2023/099630

(56) References cited:
- US-A1- 2018 023 028
- US-A1- 2019 382 679
- US-A1- 2021 309 930

## Description

The present invention is directed to boronic ester-modified polyalkyl(meth)acrylate polymers, mixtures comprising them, their use to prepare thermo-associative polymers and a simple, cost-effective method for their preparation.

Global government vehicle regulations demand ever better fuel economy to reduce greenhouse gas emissions and conserve fossil fuels. There is an increasing demand for more fuel-efficient vehicles in order to meet the targets regarding CO₂ emissions. Therefore, any incremental improvement in fuel economy (FE) is of great importance in the automotive sector.

Lubricants are playing an important role in reducing a vehicle's fuel consumption and there is a continuing need for improvements in fuel economy performance.

Lubricant properties are typically improved by the addition of additives to lubricating oils. Viscosity index (VI) improvers are generally added to a lubricant to improve its thickening efficiency and to protect the engine as they are applied between the surfaces of moving parts, notably metal surfaces.

The thickening efficiency of a VI improver is specified by its KV100 (kinematic viscosity at 100°C) at a given treat rate. The thickening effect of a polymer increases as its hydrodynamic volume in the oil increases. Increasing temperature increases the solvency of the oil, which, in turn, promotes the uncoiling of the polymer and results in a larger hydrodynamic volume.

The hydrodynamic volume of a polymer in solution depends on many parameters, such as for example the polymer chain length and composition. The longer a polymer chain, the higher is usually the weight-average molecular weight M_{w}.

The drawback of using VI improvers with a high molecular weight is that they undergo significant and irreversible degradation under mechanical stress. Such degraded polymers then experience a decline in its thickening properties that goes along with an irreversible drop in the viscosity of the lubricant.

One way to overcome this disadvantage is to prepare polymers of lower molecular weight that can associate under higher temperatures by exchanging chemical bonds in a thermo-reversible way.

### State of the Art

Patent applications US 2017/008989, US 2017/009176 and US 2018/0023028 disclose a composition resulting from the mixing of at least one copolymer A1 resulting from the copolymerization of at least one monomer functionalized by diol functional groups and of at least one compound A2 comprising at least two boronic ester functional groups. These compounds can associate and exchange chemical bonds in a thermo-reversible way. The polymers according to the present invention are not described.

WO 2019/171006 is directed to a composition resulting from the mixing of at least one comb polymer polydiol A1 and at least one compound A2 comprising at least two boronic ester functions. The polymers according to the present invention are not described.

WO 2019/171007 is directed to a composition resulting from the mixing of at least one polydiol compound A1 and at least one comb polymer A2 comprising at least two boronic ester functions. The polymers according to the present invention are not described.

WO 2019/224491, WO 2019/224492, WO 2019/224493 and WO 2019/224494 are directed to a composition resulting from the mixing of at least one oligomer A1, functionalized with diols and optionally comprising repeat units from at least on styrene monomer, and at least one compound A2 comprising at least two boronic ester functions. The polymers according to the present invention are not described.

It was now an object of the present invention to provide thermo-associative polymers that can be used as viscosity index improvers in lubricating oil compositions and that are stable over a broad temperature range. Such polymers should be usable at low treat rates.

Additionally, the synthesis of such polymers should be simple and easy to upscale, and the starting materials should be commercially available.

### Detailed Description of the invention

A first embodiment of the present invention is directed to boronic ester-modified polyalkyl (meth)acrylates **A**, comprising 2 mol% to 6 mol% of maleic acid anhydride, and 2 mol% to 6 mol%, based on the total amount of the boronic ester-modified polyalkyl (meth)acrylates **A**, of an aminophenylboronic acid ester of general formula (I) 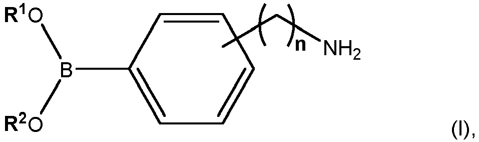 wherein
**n** denotes an integer from 0 to 12, **R¹** and **R²** are independently selected from the group consisting of hydrogen and C1-12 alkyl, or **R¹** together with **R²** form a ring of general formula (lla) 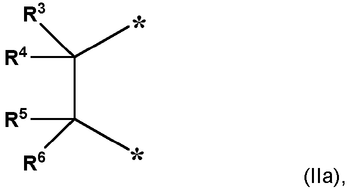
wherein **R³, R⁴, R⁵** and **R⁶** are independently selected from the group consisting of H and C1-12 alkyl and the stars "*" represent the bonds to the oxygen atoms, or
**R¹** together with **R²** form a ring of general formula (IIb) 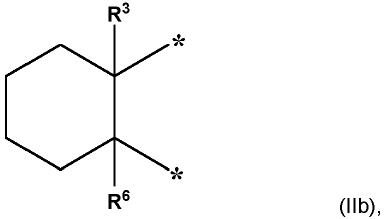
wherein **R³** and **R⁶** are independently selected from the group consisting of H and C1-12 alkyl and the stars "*" represent the bonds to the oxygen atoms, or
**R¹** together with **R²** form a ring of general formula (llc) 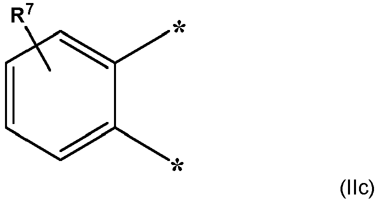
wherein **R⁷** denotes a hydrogen atom or C1-4 alkyl and the stars "*" represent the bonds to the oxygen atoms.

A further first embodiment of the present invention is directed to boronic ester-modified polyalkyl (meth)acrylates **A**, comprising:
(a1) 15% to 40% by weight of C1-4 alkyl (meth)acrylates, preferably selected from methyl methacrylate and butyl methacrylate, more preferably butyl methacrylate;
(a2) 45% to 80% by weight of C10-30 alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates;
(a3) 0% to 20% by weight of comonomers;
(a4) 1% to 3% by weight of copolymerized or grafted maleic acid anhydride; and
(a5) 2% to 6% by weight of an aminophenylboronic acid ester of general formula (I) 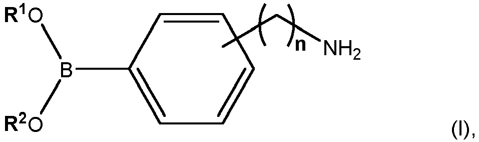 wherein n denotes an integer from 0 to 12, **R¹** and **R²** are independently selected from the group consisting of hydrogen and C1-12 alkyl, or **R¹** together with **R²** form a ring of general formula (lla) 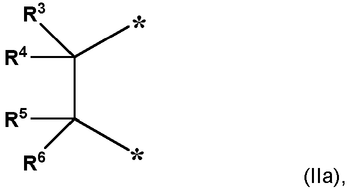 wherein **R³, R⁴, R⁵** and **R⁶** are independently selected from the group consisting of H and C1-12 alkyl and the stars "*" represent the bonds to the oxygen atoms, or
   **R¹** together with **R²** form a ring of general formula (IIb) 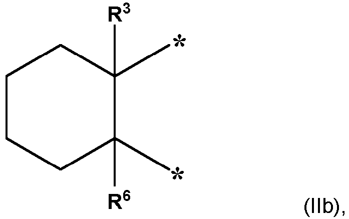 wherein **R³** and **R⁶** are independently selected from the group consisting of H and C1-12 alkyl and the stars "*" represent the bonds to the oxygen atoms, or
   **R¹** together with **R²** form a ring of general formula (llc) 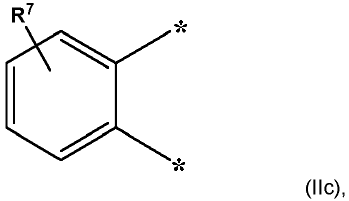 wherein **R⁷** denotes a hydrogen atom or C1-4 alkyl and the stars "*" represent the bonds to the oxygen atoms.

The content of each component (a1), (a2), (a3), (a4) and (a5) is based on the total composition of the boronic ester-modified polyalkyl (meth)acrylates **A.**

In a particular embodiment, the proportions of components (a1), (a2), (a3), (a4) and (a5) add up to 100% by weight.

In the boronic ester-modified polyalkyl (meth)acrylates **A** of general formula (I) as defined further above, the amino function can be in the ortho, meta or para position with regards to the bore substituent, preferably in the ortho or para position with regards to the bore substituent, more preferably in the para position with regards to the bore substituent.

A further first embodiment of the present invention is directed to boronic ester-modified polyalkyl (meth)acrylates **A**, wherein the C10-30 alkyl (meth)acrylates are a mixture of C12-15 alkyl (meth)acrylates and C16-20 alkyl (meth)acrylates in a weight ratio of 2:1 to 3:1.

A further first embodiment of the present invention is directed to boronic ester-modified polyalkyl (meth)acrylates **A** as defined further above, wherein in general formula (I) n denotes an integer 1 or 2 and **R¹** together with **R²** form a ring of general formula (lla) 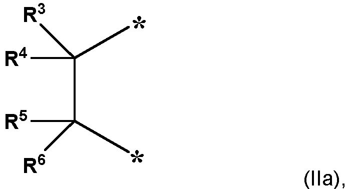 wherein **R³** and **R⁶** are independently selected from the group consisting of H and C1-3 alkyl, **R⁴** and **R⁵** are independently selected from the group consisting of H and C1-12 alkyl, and the stars "*" represent the bonds to the oxygen atoms.

The weight-average molecular weight of the boronic ester-modified polyalkyl (meth)acrylates **A** according to the present invention is preferably in the range of 50,000 to 800,000 g/mol, more preferably in the range of 100,000 to 600,000 g/mol. The number-average molecular weight of the polyalkyl(meth)acrylate polymers according to the present invention is preferably in the range of 30,000 to 100,000 g/mol, more preferably in the range of 40,000 to 80,000 g/mol.

Preferably, the polyalkyl(meth)acrylate copolymers according to the present invention have a polydipersity index (PDI) M_{w}/Mₙ in the range of 1 to 10, more preferably in the range of 2 to 6.

M_{w} and Mₙ are determined by size exclusion chromatography (SEC) using commercially available polymethylmethacrylate standards. The determination was done by gel permeation chromatography with THF as eluent.

The term "(meth)acrylates" refers to both, esters of acrylic acid and esters of methacrylic acid. Esters of methacrylic acid are preferred.

The C1-4 alkyl (meth)acrylates for use in accordance with the invention are esters of (meth)acrylic acid and straight chain or branched alcohols having 1 to 4 carbon atoms. The term "C1-4 alkyl (meth)acrylates" encompasses individual (meth)acrylic esters with an alcohol of a particular length, and likewise mixtures of (meth)acrylic esters with alcohols of different lengths.

Suitable C1-4 alkyl (meth)acrylates include, for example, methyl (meth)acrylate, ethyl (meth)acrylate, *n*-propyl (meth)acrylate), *iso*-propyl (meth)acrylate, *n*-butyl (meth)acrylate, *iso*-butyl (meth)acrylate and *tert*-butyl (meth)acrylate. Particularly preferred C₁₋₄ alkyl (meth)acrylates are methyl (meth)acrylate and n-butyl (meth)acrylate; methyl methacrylate and n-butyl methacrylate are especially preferred.

The C1-3 alkyl (meth)acrylates for use in accordance with the invention are esters of (meth)acrylic acid and straight chain or branched alcohols having 1 to 3 carbon atoms. The term "C1-3 alkyl (meth)acrylates" encompasses individual (meth)acrylic esters with an alcohol of a particular length, and likewise mixtures of (meth)acrylic esters with alcohols of different lengths.

Suitable C1-3 alkyl (meth)acrylates include, for example, methyl (meth)acrylate, ethyl (meth)acrylate, n-propyl (meth)acrylate) and iso-propyl (meth)acrylate. Particularly preferred C1-3 alkyl (meth)acrylate is methyl (meth)acrylate.

The C10-30 alkyl (meth)acrylates for use in accordance with the invention are esters of (meth)acrylic acid and straight chain or branched alcohols having 10 to 30 carbon atoms. The term "C10-30 alkyl (meth)acrylates" encompasses individual (meth)acrylic esters with an alcohol of a particular length, and likewise mixtures of (meth)acrylic esters with alcohols of different lengths. Suitable C10-30 alkyl (meth)acrylates include, for example, 2-butyloctyl (meth)acrylate, 2-hexyloctyl (meth)acrylate, decyl (meth)acrylate, 2-butyldecyl (meth)acrylate, 2-hexyldecyl (meth)acrylate, 2-octyldecyl (meth)acrylate, undecyl (meth)acrylate, 5-methylundecyl (meth)acrylate, dodecyl (meth)acrylate, 2-methyldodecyl (meth)acrylate, 2-hexyldodecyl (meth)acrylate, 2-octyldodecyl (meth)acrylate, tridecyl (meth)acrylate, 5-methyltridecyl (meth)acrylate, tetradecyl (meth)acrylate, 2-decyltetradecyl (meth)acrylate, pentadecyl (meth)acrylate, hexadecyl (meth)acrylate, 2-methylhexadecyl (meth)acrylate, 2-dodecylhexadecyl (meth)acrylate, heptadecyl (meth)acrylate, 5-isopropylheptadecyl (meth)acrylate, 4-*tert-*butyloctadecyl (meth)acrylate, 5-ethyloctadecyl (meth)acrylate, 3-isopropyloctadecyl (meth)acrylate, octadecyl (meth)acrylate, 2-decyloctadecyl (meth)acrylate, 2-tetradecyloctadecyl (meth)acrylate, nonadecyl (meth)acrylate, eicosyl (meth)acrylate, cetyleicosyl (meth)acrylate, stearyleicosyl (meth)acrylate, docosyl (meth)acrylate and/or eicosyltetratriacontyl (meth)acrylate. 2-decyl-tetradecyl (meth)acrylate, 2-decyloctadecyl (meth)acrylate, 2-dodecyl-1-hexadecyl (meth)acrylate, 1,2-octyl-1-dodecyl (meth)acrylate, 2-tetradecylocadecyl (meth)acrylate, 1,2-tetradecyl-octadecyl (meth)acrylate and 2-hexadecyl-eicosyl (meth)acrylate.

The C12-15 alkyl (meth)acrylates for use in accordance with the invention are esters of (meth)acrylic acid and alcohols having 10 to 15 carbon atoms. The term "C12-15 alkyl (meth)acrylates" encompasses individual (meth)acrylic esters with an alcohol of a particular length, and likewise mixtures of (meth)acrylic esters with alcohols of different lengths.

Suitable C12-15 alkyl (meth)acrylates include, for example, decyl (meth)acrylate, undecyl (meth)acrylate, 5-methylundecyl (meth)acrylate, dodecyl (meth)acrylate, 2-methyldodecyl (meth)acrylate, tridecyl (meth)acrylate, 5-methyltridecyl (meth)acrylate, tetradecyl (meth)acrylate and/or pentadecyl (meth)acrylate.

Particularly preferred C12-15 alkyl (meth)acrylates are methacrylic esters of a linear C12-14 alcohol mixture (C12-14 alkyl methacrylate).

The C16-20 alkyl (meth)acrylates for use in accordance with the invention are esters of (meth)acrylic acid and alcohols having 16 to 20 carbon atoms. The term "C16-20 alkyl (meth)acrylates" encompasses individual (meth)acrylic esters with an alcohol of a particular length, and likewise mixtures of (meth)acrylic esters with alcohols of different lengths.

Suitable C16-20 alkyl (meth)acrylates include, for example, 2-hexyldecyl (meth)acrylate, 2-octyldecyl (meth)acrylate, undecyl (meth)acrylate, 5-methylundecyl (meth)acrylate and dodecyl (meth)acrylate.

Particularly preferred C16-20 alkyl methacrylates are methacrylic esters of a linear C16-18 alcohol mixture (C16-18 alkyl methacrylate).

The comonomers for use in accordance with the present invention can be selected from the group consisting of styrene monomers having from 8 to 17 carbon atoms, vinyl esters having from 1 to 11 carbon atoms in the acyl group, vinyl ethers having from 1 to 10 carbon atoms in the alcohol group, (di)alkyl fumarates having from 1 to 10 carbon atoms in the alcohol group, (di)alkyl maleates having from 1 to 10 carbon atoms in the alcohol group, dispersing nitrogen-functionalized monomers, and mixtures of these monomers.

Examples of styrene monomers having from 8 to 17 carbon atoms are styrene, substituted styrenes having an alkyl substituent in the side chain, for example alpha-methylstyrene and alpha-ethylstyrene, substituted styrenes having an alkyl substituent on the ring, such as vinyltoluene and para-methylstyrene, halogenated styrenes, for example monochlorostyrenes, dichlorostyrenes, tribromostyrenes and tetrabromostyrenes; preferred is styrene.

Examples of vinyl esters having from 1 to 11 carbon atoms in the acyl group include vinyl formiate, vinyl acetate, vinyl propionate, vinyl butyrate. Preferred vinyl esters include from 2 to 9, more preferably from 2 to 5 carbon atoms in the acyl group. The acyl group here may be linear or branched.

Examples of vinyl ethers having from 1 to 10 carbon atoms in the alcohol group include vinyl methyl ether, vinyl ethyl ether, vinyl propyl ether, vinyl butyl ether. Preferred vinyl ethers include from 1 to 8, more preferably from 1 to 4 carbon atoms in the alcohol group. The alcohol group here may be linear or branched.

The notation "(di)ester" means that monoesters, diesters and mixtures of esters, especially of fumaric acid and/or of maleic acid, may be used. The (di)alkyl fumarates having from 1 to 10 carbon atoms in the alcohol group include monomethyl fumarate, dimethyl fumarate, monoethyl fumarate, diethyl fumarate, methyl ethyl fumarate, monobutyl fumarate, dibutyl fumarate, dipentyl fumarate and dihexyl fumarate. Preferred (di)alkyl fumarates comprise from 1 to 8, more preferably from 1 to 4 carbon atoms in the alcohol group. The alcohol group here may be linear or branched.

The (di)alkyl maleates having from 1 to 10 carbon atoms in the alcohol group include monomethyl maleate, dimethyl maleate, monoethyl maleate, diethyl maleate, methyl ethyl maleate, monobutyl maleate, dibutyl maleate. Preferred (di)alkyl maleates comprise from 1 to 8, more preferably from 1 to 4 carbon atoms in the alcohol group. The alcohol group here may be linear or branched.

Examples of dispersing nitrogen-functionalized monomers are aminoalkyl (meth)acrylates, such as N,N-dimethylaminoethyl (meth)acrylate, N,N-dimethylaminopropyl (meth)acrylate, N,N-diethylaminopentyl (meth)acrylate, N,N-dibutylaminohexadecyl (meth)acrylate; aminoalkyl(meth)acrylamides, such as N,N-dimethylaminopropyl(meth)acrylamide; heterocyclic (meth)acrylates, such as 2-(1-imidazolyl)ethyl (meth)acrylate, 2-(4-morpholinyl)ethyl (meth)acrylate, 1-(2-methacryloyloxyethyl)-2-pyrrolidone, N-methacryloylmorpholine, N-methacryloyl-2-pyrrolidinone, N-(2-methacryloyloxyethyl)-2-pyrrolidinone, N-(3-methacryloyloxypropyl)-2-pyrrolidinone; heterocyclic vinyl compounds, such as 2-vinylpyridine, 4-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinylpyrrolidone, N-vinylpyrrolidine, 3-vinylpyrrolidine, N-vinylcaprolactam, N-vinylbutyrolactam, vinyloxolane, vinylfuran, vinyloxazoles and hydrogenated vinyloxazoles.

The N-dispersant monomer may specifically be at least one monomer selected from the group consisting of N-vinyl pyrrolidinone, N,N-dimethylaminoethyl methacrylate, and N,N-dimethylaminopropyl methacrylamide.

A further embodiment of the present invention is directed to the boronic ester-modified polyalkyl (meth)acrylates **A** as outlined further above, wherein the aminophenylboronic acid ester of general formula (I) is selected from the group consisting of 3-aminophenylboronic acid pinacol ester, 4-aminophenylboronic acid pinacol ester, 3-aminophenylboronic acid 1,2-dihydroxybenzene ester, 4-aminophenylboronic acid 1,2-dihydroxybenzene ester, 3-aminophenylboronic acid 1,2-dihydroxycyclohehyl ester and 4-aminophenylboronic acid 1,2-dihydroxycyclohexyl ester, preferably 3-aminophenylboronic acid pinacol ester and 4-aminophenylboronic acid pinacol ester, more preferably 4-aminophenylboronic acid pinacol ester:

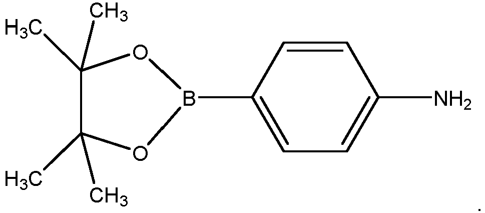

A further embodiment of the present invention is directed to the boronic ester-modified polyalkyl (meth)acrylates **A** as outlined further above, wherein the maleic acid anhydride is grafted.

A further embodiment of the present invention is directed to grafted boronic ester-modified polyalkyl (meth)acrylates **A** consisting of a base polymer **A1** and units **A2** that are grafted thereon, wherein the base polymer **A1** comprises:
(a1) 15% to 40% by weight of C1-4 alkyl (meth)acrylates, preferably selected from methyl methacrylate and butyl methacrylate, more preferably butyl methacrylate;
(a2) 45% to 80% by weight of C10-30 alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates; and
(a3) 0% to 20% by weight of comonomers; and
the grafted units **A2** comprise repeating units prepared from:
(a4) 1% to 3% by weight of copolymerized or grafted maleic acid anhydride; and
(a5) 2% to 6% by weight of an aminophenylboronic acid ester of general formula (I) 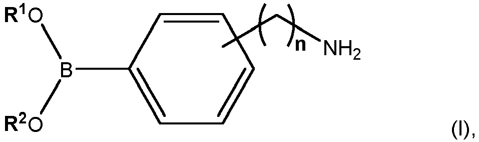 wherein n denotes an integer from 0 to 12, **R¹** and **R²** are independently selected from the group consisting of hydrogen and C1-12 alkyl, or **R¹** together with **R²** form a ring of general formula (lla) 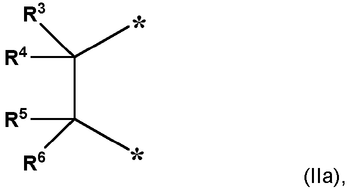 wherein **R³, R⁴, R⁵** and R⁶ are independently selected from the group consisting of H and C1-12 alkyl and the stars "*" represent the bonds to the oxygen atoms, or
   **R¹** together with **R²** form a ring of general formula (IIb) 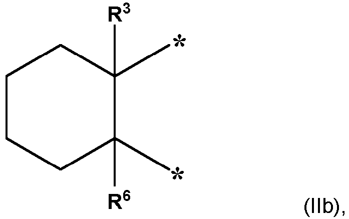 wherein **R³** and R⁶ are independently selected from the group consisting of H and C1-12 alkyl and the stars "*" represent the bonds to the oxygen atoms, or
   **R¹** together with **R²** form a ring of general formula (llc) 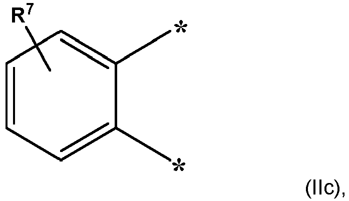 wherein **R⁷** denotes a hydrogen atom or C1-4 alkyl and the stars "*" represent the bonds to the oxygen atoms.

The content of each component (a1), (a2), (a3), (a4) and (a5) is based on the total composition of the boronic ester-modified polyalkyl (meth)acrylate **A**. In a particular embodiment, the proportions of components (a1), (a2), (a3), (a4) and (a5) add up to 100% by weight.

The polymers according to the present invention are characterized by their ability to form association-related thickeners.

A further embodiment of the present invention is therefore directed to the use of boronic ester-modified polyalkyl (meth)acrylates **A** according to the present invention to prepare association-related thickeners.

A second embodiment of the present invention is directed to an additive composition, comprising:
(A) 40% to 60% by weight of a base oil; and
(B) 40% to 60% by weight of a boronic ester-modified polyalkyl (meth)acrylate **A**, comprising:
   (a1) 15% to 40% by weight of C1-4 alkyl (meth)acrylates, preferably selected from methyl methacrylate and butyl methacrylate, more preferably butyl methacrylate;
   (a2) 45% to 80% by weight of C₁₀₋₃₀-alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates;
   (a3) 0% to 20% by weight of comonomers;
   (a4) 1% to 3% by weight of maleic acid anhydride; and
   (a5) 2% to 6% by weight of an aminophenylboronic acid ester of general formula (I) 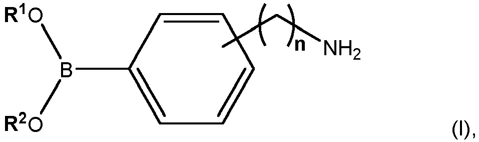 wherein n denotes an integer from 0 to 12, **R¹** and **R²** are independently selected from the group consisting of hydrogen and C1-12 alkyl, or **R¹** together with **R²** form a ring of general formula (lla) 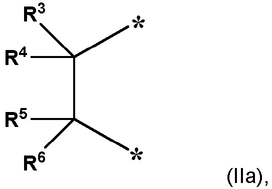 wherein **R³, R⁴, R⁵** and **R⁶** are independently selected from the group consisting of H and C1-12 alkyl and the stars "_{*}" represent the bonds to the oxygen atoms, or
      **R¹** together with **R²** form a ring of general formula (IIb) 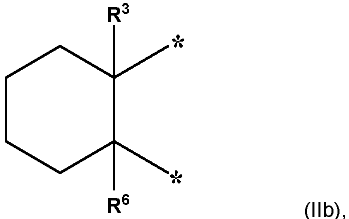 wherein **R³** and R⁶ are independently selected from the group consisting of H and C1-12 alkyl and the stars "*" represent the bonds to the oxygen atoms, or
      **R¹** together with **R²** form a ring of general formula (llc) 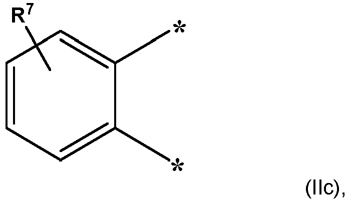 wherein **R⁷** denotes a hydrogen atom or C1-4 alkyl and the stars "_{*}" represent the bonds to the oxygen atoms.

The content of each component (A) and (B) is based on the total weight of the additive composition. In a particular embodiment, the proportions of components (A) and (B) add up to 100% by weight.

The content of each component (a1), (a2), (a3), (a4) and (a5) is based on the total composition of the boronic ester-modified polyalkyl (meth)acrylate **A.** In a particular embodiment, the proportions of components (a1), (a2), (a3), (a4) and (a5) add up to 100% by weight.

The base oil to be used in the additive composition comprises an oil of lubricating viscosity. Such oils include natural and synthetic oils, oil derived from hydrocracking, hydrogenation, and hydro-finishing, unrefined, refined, re-refined oils or mixtures thereof.

The base oil may also be defined as specified by the American Petroleum Institute (API) (see April 2008 version of "Appendix E-API Base Oil Interchangeability Guidelines for Passenger Car Motor Oils and Diesel Engine Oils", section 1.3 Sub-heading 1.3. "Base Stock Categories").

The API currently defines five groups of lubricant base stocks (API 1509, Annex E - API Base Oil Interchangeability Guidelines for Passenger Car Motor Oils and Diesel Engine Oils, September 2011). Groups I, II and III are mineral oils which are classified by the amount of saturates and sulphur they contain and by their viscosity indices; Group IV are polyalphaolefins; and Group V are all others, including e.g. ester oils. The table below illustrates these API classifications.

| Group | Saturates | Sulphur content | Viscosity Index (VI) |
|---|---|---|---|
| I | < 90% | > 0.03% | 80-120 |
| II | at least 90% | not more than 0.03% | 80-120 |
| III | at least 90% | not more than 0.03% | at least 120 |
| IV | All polyalphaolefins (PAOs) | | |
| V | All others not included in Groups I, II, III or IV (e.g. ester oils) | | |

The kinematic viscosity at 100°C (KV100) of appropriate apolar base oils used to prepare an additive composition in accordance with the present invention is preferably in the range of 3 mm²/s to 10 mm²/s, more preferably in the range of 4 mm²/s to 8 mm²/s, according to ASTM D445.

Further base oils which can be used in accordance with the present invention are Group II-III Fischer-Tropsch derived base oils.

Fischer-Tropsch derived base oils are known in the art. By the term "Fischer-Tropsch derived" is meant that a base oil is, or is derived from, a synthesis product of a Fischer-Tropsch process. A Fischer-Tropsch derived base oil may also be referred to as a GTL (Gas-To-Liquids) base oil. Suitable Fischer-Tropsch derived base oils that may be conveniently used as the base oil in the additive composition of the present invention are those as for example disclosed in EP 0 776 959, EP 0 668 342, WO 97/21788, WO 00/15736, WO 00/14188, WO 00/14187, WO 00/14183, WO 00/14179, WO 00/08115, WO 99/41332, EP 1 029 029, WO 01/18156, WO 01/57166 and WO 2013/189951.

Especially for engine oil formulations are used base oils of API Group III.

The additive composition of the present invention comprises preferably 45% to 55% by weight, of the base oil (A) and 45% to 55% by weight, of the boronic ester-modified polyalkyl (meth)acrylate (B), based on the total weight of the additive composition.

A third embodiment of the present invention is directed to a mixture comprising equal amounts of:
(A) a boronic ester-modified polyalkyl (meth)acrylate **A**, comprising:
   (a1) 15% to 40% by weight of C1-4 alkyl (meth)acrylates, preferably selected from methyl methacrylate and butyl methacrylate, more preferably butyl methacrylate;
   (a2) 45% to 80% by weight of C10-30 alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates;
   (a3) 0% to 20% by weight of comonomers;
   (a4) 1% to 3% by weight of maleic acid anhydride; and
   (a5) 2% to 6% by weight of an aminophenylboronic acid ester of general formula (I) 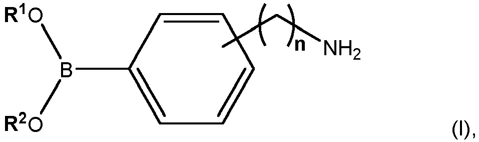 wherein n denotes an integer from 0 to 12, **R¹** and **R²** are independently selected from the group consisting of hydrogen and C1-12 alkyl, or **R¹** together with **R²** form a ring of general formula (lla) 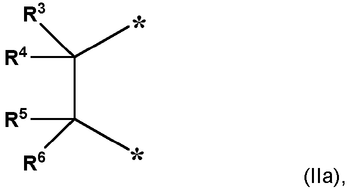 wherein **R³, R⁴, R⁵** and **R⁶** are independently selected from the group consisting of H and C1-12 alkyl and the stars "_{*}" represent the bonds to the oxygen atoms, or
      **R¹** together with **R²** form a ring of general formula (IIb) 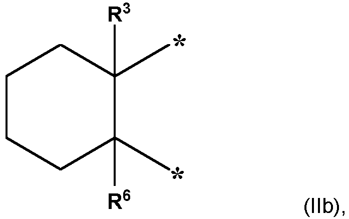 wherein **R³** and **R⁶** are independently selected from the group consisting of H and C1-12 alkyl and the stars "_{*}" represent the bonds to the oxygen atoms, or
      **R¹** together with **R²** form a ring of general formula (llc) 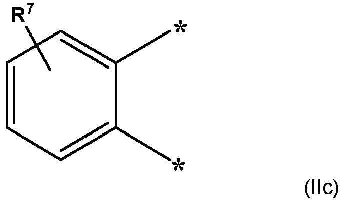 wherein **R⁷** denotes a hydrogen atom or C1-4 alkyl and the stars "_{*}" represent the bonds to the oxygen atoms; and
(B) a diol-functionalized polyalkyl (meth)acrylate **B** comprising the following monomers:
   (b1) 15% to 40% by weight of C1-4 alkyl (meth)acrylates, preferably selected from methyl methacrylate and butyl methacrylate, more preferably butyl methacrylate;
   (b2) 45% to 80% by weight of C10-30 alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates;
   (b3) 0% to 20% by weight of comonomers; and
   (b4) 1% to 6% by weight of a diol selected from the group consisting of 2,3-dihydroxypropyl methacrylate and 5,6-dihydroxyhexyl methacrylate, preferably 2,3-dihydroxypropyl methacrylate.

The content of each component (A) and (B) is based on the total weight of the mixture. In a particular embodiment, the proportions of components (A) and (B) add up to 100% by weight.

The content of each component (a1), (a2), (a3), (a4) and (a5) is based on the total composition of the boronic ester-modified polyalkyl (meth)acrylate **A**. In a particular embodiment, the proportions of components (a1), (a2), (a3), (a4) and (a5) add up to 100% by weight.

The content of each component (b1), (b2), (b3) and (b4) is based on the total composition of the diol-functionalized polyalkyl (meth)acrylate **B**. In a particular embodiment, the proportions of components (b1), (b2), (b3) and (b4) add up to 100% by weight.

A further third embodiment of the present invention is directed to a mixture as defined further above, wherein component (a5) of the boronic ester-modified polyalkyl (meth)acrylate **A** and component (b4) of the diol-functionalized polyalkyl (meth)acrylate **B** are present in equal amounts of 2 mol% to 6 mol%.

The weight-average molecular weight of the diol-functionalized polyalkyl (meth)acrylates **B** according to the present invention is preferably in the range of 100,000 to 400,000 g/mol, more preferably in the range of 150,000 to 200,000 g/mol. The number-average molecular weight of the polyalkyl(meth)acrylate polymers according to the present invention is preferably in the range of 20,000 to 150,000 g/mol, more preferably in the range of 50,000 to 70,000 g/mol.

Preferably, the polyalkyl(meth)acrylate polymers according to the present invention have a polydipersity index (PDI) M_{w}/Mₙ in the range of 1 to 10, more preferably in the range of 2 to 6, more preferably in the range of 2 to 3.

M_{w} and Mₙ are determined by size exclusion chromatography (SEC) using commercially available polymethylmethacrylate standards. The determination was done by gel permeation chromatography with THF as eluent.

The mixtures according to the present invention are characterized by their ability to form association-related thickeners.

A further embodiment of the present invention is therefore directed to the use of the mixture comprising equal amounts of boronic ester-modified polyalkyl (meth)acrylates **A** and diol-functionalized polyalkyl (meth)acrylates **B** according to the present invention to prepare association-related thickeners.

A further embodiment of the present invention is directed to a method for preparing association-related thickeners, comprising the steps of:
(i) preparing a boronic ester-modified polyalkyl (meth)acrylate **A**;
(ii) preparing a diol-functionalized polyalkyl (meth)acrylate **B**; and
(iii) mixing the boronic ester-modified polyalkyl (meth)acrylate **A** of step (i) with the diol-functionalized polyalkyl (meth)acrylate **B** of step (ii) to receive a thermo-associative thickener.

The boronic ester-modified polyalkyl (meth)acrylates **A** and the diol-functionalized polyalkyl (meth)acrylates **B** according to the present invention can be prepared by free-radical polymerization and by related methods of controlled free-radical polymerization, for example ATRP (= atom transfer radical polymerization) or RAFT (= reversible addition fragmentation chain transfer).

Standard free-radical polymerization is detailed, inter alia, in Ullmann's Encyclopedia of Industrial Chemistry, Sixth Edition. In general, a polymerization initiator and optionally a chain transfer agent are used for this purpose.

The usable initiators include azo initiators widely known in the technical field, such as AIBN and 1,1-azobiscyclohexanecarbonitrile, and also peroxy compounds such as methyl ethyl ketone peroxide, acetylacetone peroxide, dilauryl peroxide, tert-butyl per-2-ethylhexanoate, ketone peroxide, tert-butyl peroctoate, methyl isobutyl ketone peroxide, cyclohexanone peroxide, dibenzoyl peroxide, tert-butyl perbenzoate, 2,2-bis(tert-butylperoxy)butane, tert-butyl peroxyisopropylcarbonate, 2,5-bis(2-ethylhexanoylperoxy)-2,5-dimethylhexane, tert-butyl peroxy-2-ethylhexanoate, tert-butyl peroxy-3,5,5-trimethylhexanoate, dicumyl peroxide, 1,1-bis(tert-butylperoxy)cyclohexane, 1,1-bis(tert-butylperoxy)-3,3,5-trimethylcyclohexane, cumyl hydroperoxide, tert-butyl hydroperoxide, bis(4-tert-butylcyclohexyl) peroxydicarbonate, mixtures of two or more of the aforementioned compounds with one another, and mixtures of the aforementioned compounds with unspecified compounds which can likewise form free radicals. Preferably used in accordance with the present invention are tert-butyl perbenzoate and 2,2-bis(tert-butylperoxy)butane. Suitable chain transfer agents are especially oil-soluble mercaptans, for example n-dodecyl mercaptan or 2-mercaptoethanol, or else chain transfer agents from the class of the terpenes, for example terpinolene.

The ATRP method is known per se. It is assumed that this is a "living" free-radical polymerization, but no restriction is intended by the description of the mechanism. In these processes, a transition metal compound is reacted with a compound having a transferable atom group. This involves transfer of the transferable atom group to the transition metal compound, as a result of which the metal is oxidized. This reaction forms a free radical which adds onto ethylenic groups. However, the transfer of the atom group to the transition metal compound is reversible, and so the atom group is transferred back to the growing polymer chain, which results in formation of a controlled polymerization system. It is accordingly possible to control the formation of the polymer, the molecular weight and the molecular weight distribution.

This reaction regime is described, for example, by J.-S. Wang, et al., J. Am. Chem. Soc, vol. 117, p. 5614-5615 (1995), by Matyjaszewski, Macromolecules, vol. 28, p. 7901-7910 (1995). In addition, patent applications WO 96/30421, WO 97/47661, WO 97/18247, WO 98/40415 and WO 99/10387 disclose variants of the above-elucidated ATRP. In addition, the polymers of the invention can also be obtained via RAFT methods, for example. This method is described in detail, for example, in WO 98/01478 and WO 2004/083169.

The polymerization can be conducted under standard pressure, reduced pressure or elevated pressure. The polymerization temperature is also uncritical. In general, however, it is in the range from -20°C to 200°C, preferably 50°C to 150°C and more preferably 80°C to 130°C.

The polymerization can be conducted with or without solvent. The term "solvent" should be understood here in a broad sense. The solvent is selected according to the polarity of the monomers used, it being possible with preference to use 100N oil, comparatively light gas oil and/or aromatic hydrocarbons, for example toluene or xylene.

As outlined further above, the boronic ester-modified polyalkyl (meth)acrylates **A** comprise either copolymerized or grafted units of maleic acid anhydride.

In cases where the boronic ester-modified polyalkyl (meth)acrylates **A** are subsequently grafted with maleic acid anhydride, this is preferably done by a polymer-analogous reaction after the above-described preparation of boronic ester-modified polyalkyl (meth)acrylates **A**. Accordingly, it is possible with preference first to prepare a polymer by the use of reactive polar unsaturated monomers like maleic acid anhydride. The reactive units are subsequently further reacted with an aminophenylboronic acid ester of general formula (I) as described further above.

The reaction of the reactive polar unsaturated monomer present in the polymer, preferably of the maleic acid anhydride, with the mentioned aminophenylboronic acid esters can be effected typically between 40°C and 180°C, preferably between 80°C and 180°C and more preferably between 100°C and 160°C. The aminophenylboronic acid ester can preferably be added in an equimolar amount to the reactive polar groups, preferably to the anhydride. If excessive amounts of aminophenylboronic acid ester are added, it can subsequently be removed from the mixture. In the case of excessively small proportions, reactive groups remain, which can optionally be converted to less reactive groups by addition of small amounts of water.

The aminophenylboronic acid ester can be added in pure form to the reaction mixture or in a suitable solvent. Preference is given to polar solvents, especially esters, e.g. butyl acetate, diisononyl adipate or dioctylsebacate.

According to the nature of the reactive reactant group converted, water may be formed. For example, in the case of use of anhydride groups, water is released, which, in a particular aspect of the present invention, can be removed substantially completely from the reaction mixture, it being possible to drive out water, for example, by means of dry nitrogen. In addition, it is possible to use desiccants. Volatile solvents such as butyl acetate, if used, can be distilled off after the reaction, preferably under reduced pressure.

The following figures illustrate the results retrieved for the viscosity indices when using the polymer compositions of the present invention:

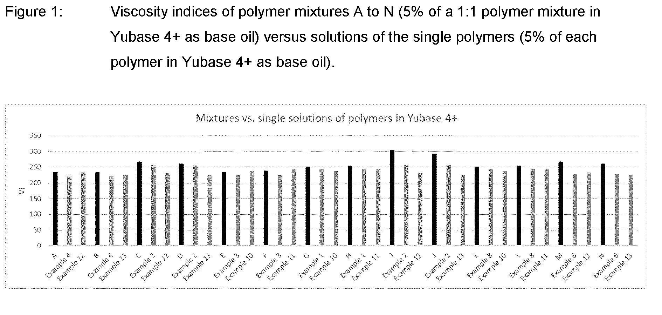

- Figure 1:: Viscosity indices of polymer mixtures A to N (5% of a 1:1 polymer mixture in Yubase 4+ as base oil) versus solutions of the single polymers (5% of each polymer in Yubase 4+ as base oil).

The invention is further illustrated by the following non-limiting examples.

### Experimental Part

### Abbreviations

- AMA: alkyl methacrylate
- AMBER: 4-aminophenylboronic acid pinacol ester
- BMA: C₄-alkyl methacrylate = *n*-butyl methacrylate
- Diol 1: 2,3-dihydroxypropyl methacrylate (2,3-DHMA)
- Diol 2: 5,6-dihydroxyhexyl methacrylate (5,6-DHMA)
- GPC: gel permeation chromatography
- KV: kinematic viscosity measured according to ASTM D445
- KV40: kinematic viscosity @40°C, measured according to ASTM D7042
- KV100: kinematic viscosity @100°C, measured according to ASTM D7042
- LMA: lauryl methacrylate, 73% C12, 27% C14, all linear
- MAA: maleic acid anhydride
- MMA: C₁-alkyl methacrylate = methyl methacrylate
- Mₙ: number-average molecular weight
- M_{w}: weight-average molecular weight
- NB3043: Nexbase^{®} 3043, Group III base oil from Neste with a KV100 of 4.3 cSt
- PDI: polydispersity index
- SMA: stearyl methacrylate, 6% C14, 30% C16, 64% C18, all linear
- tBPO: *tert*-butyl-peroxy-2-ethyl-hexanoate
- VI: viscosity index, measured according to ISO 2909
- Yubase 4+: Group III base oil from SK Lubricants with a KV100 of 4.2 cSt

### Test methods

The boronic ester-modified polyalkyl (meth)acrylates **A** and the diol-functionalized polyalkyl (meth)acrylates **B** according to the present invention were characterized with respect to their molecular weight and PDI.

The weight-average molecular weights (M_{w}) of the boronic ester-modified polyalkyl (meth)acrylates **A** and the polyalkyl (meth)acrylates **B** according to the present invention were determined by gel permeation chromatography (GPC) using polymethyl methacrylate calibration standards according to DIN 55672-1 using the following measurement conditions:

| | |
|---|---|
| Eluent: | tetrahydrofuran (THF), including 0.02 M 2-diethylamino ethylamine |
| Operation temperature: | 35°C |
| Column: | column set consisting of four columns: SDV 106 Å, SDV 104 Å and SDV 103 Å (PSS Standards Service GmbH, Mainz, Germany), all with the size of 300 x 8 mm and an average particle size of 10 µm |
| Flow rate: | 1 mL/min |
| Injected volume: | 100 µL |
| Instrument: | Agilent 1100 series consisting of an autosampler, pump and column oven |
| Detection device: | A refractive index detector from Agilent 1260 series. |

The additive compositions including the boronic ester-modified polyalkyl (meth)acrylates **A** according to the present invention were characterized with respect to their viscosity index (VI) to ASTM D 2270, kinematic viscosity at 40°C (KV40) and 100°C (KV100) to ASTM D445.

If not stated otherwise, the term "%" means % by weight (wt.%).

### Synthesis of the boronic ester-modified polyalkyl (meth)acrylates A

### (1) Synthesis of the base polymers either for later grafting with maleic acid anhydride or already copolymerized with maleic acid anhydride

Base polymers without maleic acid anhydride: Examples 1a, 2a and 5a
Base polymers with maleic acid anhydride: Examples 3a, 4a and 6a

A solution of 0.8% of initiator 2,2-bis(tert-butylperoxy)butane in the monomer mixture is prepared at room temperature (compositional details of the monomer mixtures are shown in Tables 1 and 2). An apparatus with 4-neck flask and precision glass saber stirrer was initially charged with 300 g NB3043. After heating to 106°C under nitrogen, 450 g of a monomer-initiator-mixture was added within 2 hours. Then the reaction mixture was cooled down to 95°C and 0.4% (based to the total amount of monomers) of 2,2-bis(tert-butylperoxy)butane was added and the resulting mixture stirred at 95°C overnight. 750 g of a 60% solution of polymer in NB3043 was obtained.

**Table 1: Monomer mixtures used to prepare the base polymers for later grafting with maleic acid anhydride.**

| **Example #** | **Type of polymer** | **BMA [%]** | **LMA [%]** | **SMA [%]** |
|---|---|---|---|---|
| 1a | base polymer | 34.61 | 46.43 | 18.96 |
| 2a | base polymer | 26.85 | 51.94 | 21.21 |
| 5a | base polymer | 26.85 | 51.94 | 21.21 |

**Table 2: Monomer mixtures used to prepare the base polymers with copolymerized maleic anhydride.**

| **Example #** | **Type of polymer** | **SMA [%]** | **LMA [%]** | **SMA [%]** | **MAA [%]** |
|---|---|---|---|---|---|
| 3a | MAA copolymer | 34.19 | 45.86 | 18.73 | 1.22 |
| 4a | MAA copolymer | 26.20 | 50.69 | 20.71 | 2.40 |
| 6a | MAA copolymer | 34.19 | 45.86 | 18.73 | 1.22 |

The conversion of the used monomers was around 100%; i.e. the net compositions of the resulting polymers correspond to the mixtures used in the copolymerizations.

### (2) Grafting step before post-polymerization functionalization

### Example 1b (base polymer was Example 1a)

Maleic acid anhydride was heated up at 90°C. An apparatus with a 4-neck flask and precision glass saber stirrer was charged with 400 g of the base polymer mixture as prepared under (1) and heated up to 110°C under nitrogen. Subsequently, 3 g of molten maleic anhydride was added followed by an addition of 1.2 g of tert-butyl perbenzoate. Subsequently, the reaction temperature was increased to 130°C. After 1 hour and 2 hours, another 0.6 g of tert-butyl perbenzoate was each added to the reaction mixture. The mixture was then cooled down to 120°C to add after 3 hours 1 g of 2,2-bis(tert-butylperoxy)butane and after 4 hours 2 g of 2,2-bis(tert-butylperoxy)butane and the mixture is stirred overnight. 408 g of a 60% solution of polymer in NB3043 was obtained.

### Example 2b (base polymer was Example 2a)

Maleic acid anhydride was heated up at 90°C. An apparatus with a 4-neck flask and precision glass saber stirrer was charged with 400 g of the base polymer mixture as prepared under (1) and heated up to 110°C under nitrogen. Then 5.9 g of molten maleic anhydride was added followed by an addition of 1.2 g of tert-butyl perbenzoate. Subsequently, the reaction temperature was increased to 130°C. After 1 hour and 2 hours, another 0.6 g of tert-butyl perbenzoate was each added to the reaction mixture. The mixture was then cooled down to 120°C to add after 3 hours 1 g of 2,2-bis(tert-butylperoxy)butane and after 4 hours 2 g of 2,2-bis(tert-butylperoxy)butane and the mixture is stirred overnight. 411 g of a 60% solution of polymer in NB3043 was obtained.

### Example 5b (base polymer was Example 5a)

Maleic anhydride was heated up at 90°C. An apparatus with a 4-neck flask and precision glass saber stirrer was charged with 500 g of the base polymer mixture as prepared under (1) and heated up to 110°C under nitrogen. Then 7.4 g of molten maleic anhydride was added followed by an addition of 1.5 g of tert-butyl perbenzoate. Subsequently, the reaction temperature was increased to 130°C. After 1 hour and 2 hours, another 0.75 g of tert-butyl perbenzoate was each added to the reaction mixture. The mixture was then cooled down to 120°C to add after 3 hours 1.2 g of 2,2-bis(tert-butylperoxy)butane and after 4 hours 2.4 g of 2,2-bis(tert-butylperoxy)butane and the mixture is stirred overnight. 541 g of a 60% solution of polymer in NB3043 was obtained.

The net compositions of the grafted polymers are shown in the following Table 3.

**Table 3: Net compositions of the grafted polymers A.**

| **Example #** | **Type of polymer** | **Base polymer** | **BMA [%]** | **LMA [%]** | **SMA [%]** | **MAA [%]** |
|---|---|---|---|---|---|---|
| 1b | MAA graft polymer | 1a | 34.19 | 45.86 | 18.73 | 1.22 |
| 2b | MAA graft polymer | 2a | 26.20 | 50.69 | 20.71 | 2.40 |
| 5b | MAA graft polymer | 5a | 26.20 | 50.69 | 20.71 | 2.40 |

### (3) Post-polymerization modification

### Example 1c (base polymer was Example 1b)

A solution of 4 wt.% of 4-aminophenylboronic acid pinacol ester in dioctylsebacate was prepared. Then an apparatus with a 4-neck flask, precision glass saber stirrer and condenser was charged with 120 g of the polymer mixture prepared as described under steps (1) or (2). After heating to 130°C under nitrogen, 49.8 g of the 4-aminophenylboronic acid pinacol ester solution was added within 1 hour. The post-grafting reaction was finished 2 hours after the addition of the 4-aminophenylboronic acid pinacol ester and the mixture was diluted to a solids content of 25% with NB3043.

### Example 2c (base polymer was Example 2b)

A solution of 4 wt.% of 4-aminophenylboronic acid pinacol ester in dioctylsebacate was prepared. Then an apparatus with a 4-neck flask, precision glass saber stirrer and condenser was charged with 120 g of the polymer mixture prepared as described under steps (1) or (2). After heating to 130°C under nitrogen, 98.5 g of the 4-aminophenylboronic acid pinacol ester solution was added within 1 hour. The post-grafting reaction was finished 2 hours after the addition of the 4-aminophenylboronic acid pinacol ester and the mixture was diluted to a solids content of 25% with NB3043.

### Example 3b (base polymer was Example 3a)

A solution of 4 wt.% of 4-aminophenylboronic acid pinacol ester in dioctylsebacate was prepared. Then an apparatus with a 4-neck flask, precision glass saber stirrer and condenser was charged with 120 g of the polymer mixture prepared as described under step (1) or (2). After heating to 130°C under nitrogen, 50.2 g of the 4-aminophenylboronic acid pinacol ester solution was added within 1 hour. The post-grafting reaction was finished 2 hours after the addition of the 4-aminophenylboronic acid pinacol ester and the mixture was diluted to a solids content of 25% with NB3043.

### Examples 4b (base polymer was Example 4a)

A solution of 4 wt.% of 4-aminophenylboronic acid pinacol ester in dioctylsebacate was prepared. Then an apparatus with a 4-neck flask, precision glass saber stirrer and condenser was charged with 120 g of the polymer mixture prepared as described under step (1) or (2). After heating to 130°C under nitrogen, 99.5 g of the 4-aminophenylboronic acid pinacol ester solution was added within 1 hour. The post-grafting reaction was finished 2 hours after the addition of the 4-aminophenylboronic acid pinacol ester and the mixture was diluted to a solids content of 25% with NB3043.

### Example 5c (base polymer was Example 5b)

A solution of 4 wt.% of 4-aminophenylboronic acid pinacol ester in dioctylsebacate was prepared. Then an apparatus with a 4-neck flask, precision glass saber stirrer and condenser was charged with 120 g of the polymer mixture prepared as described under step (1) or (2). After heating to 130°C under nitrogen, 98.4 g of the 4-aminophenylboronic acid pinacol ester solution was added within 1 hour. The post-grafting reaction was finished 2 hours after the addition of the 4-aminophenylboronic acid pinacol ester and the mixture was diluted to a solids content of 25% with NB3043.

### Example 6b (base polymer was Example 6a)

A solution of 4 wt.% of 4-aminophenylboronic acid pinacol ester in dioctylsebacate was prepared. Then an apparatus with a 4-neck flask, precision glass saber stirrer and condenser was charged with 120 g of the polymer mixture prepared as described under steps (1) or (2). After heating to 130°C under nitrogen, 49.8 g of the 4-aminophenylboronic acid pinacol ester solution was added within 1 hour. The post-grafting reaction was finished 2 hours after the addition of the 4-aminophenylboronic acid pinacol ester and the mixture was diluted to a solids content of 25% with NB3043.

The net compositions of the resulting boronic ester-modified polyalkyl (meth)acrylates **A** are shown in the following Table 4.

**Table 4: Net compositions of the boronic ester-modified polyalkyl (meth)acrylates A.**

| **Example #** | **Type of polymer** | **Base polymer** | **BMA [%]** | **LMA [%]** | **SMA [%]** | **MAA [%]** | **AMBER [%]** |
|---|---|---|---|---|---|---|---|
| 1c | AMBER graft polymer | 1b | 33.28 | 44.64 | 18.24 | 1.19 | 2.65 |
| 2c | AMBER graft polymer | 2b | 24.87 | 48.11 | 19.65 | 2.28 | 5.09 |
| 3b | AMBER Copolymer | 3a | 33.28 | 44.64 | 18.24 | 1.19 | 2.65 |
| 4b | AMBER Copolymer | 4a | 24.87 | 48.11 | 19.65 | 2.28 | 5.09 |
| 5c | AMBER graft polymer | 5b | 24.87 | 48.11 | 19.65 | 2.28 | 5.09 |
| 6b | AMBER Copolymer | 6a | 33.28 | 44.64 | 18.24 | 1.19 | 2.65 |

### (4) Synthesis of the diol-functionalized base polymers

Examples 7 and 9 (comprising 5,6-DHMA)
Examples 8 and 10 (comprising 2,3-DHMA)

A solution of a monomer mixture (compositional details of the examples of the used monomer mixtures are given in Table 5) and 0.285% (based to the total amount of monomers) of initiator 2,2-bis(tert-butylperoxy)butane was prepared at room temperature. An apparatus with 4-neck flask and precision glass saber stirrer was initially charged with 60 g butyl acetate. After heating to 106°C under nitrogen, 90 g of the monomer-initiator-mixture was added within 2 hours. Then the reaction mixture was cooled down to 95°C and 0.2% (based to the total amount of monomers) of 2,2-bis(tert-butylperoxy)butane was added and the mixture was stirred at 95°C overnight. 150 g of a 60% solution of polymer in butyl acetate was obtained. The solvent was then exchanged by adding NB3043 to the solution of polymer in butyl acetate. Subsequently, the butyl acetate was removed by vacuum distillation resulting in a 25% solution of polymer in NB3043.

**Table 5: Monomer mixtures used to prepare the diol-functionalized base polymers B.**

| **Example #** | **BMA [%]** | **LMA [%]** | **SMA [%]** | **DIOL 1 [%]** | **DIOL 2 [%]** |
|---|---|---|---|---|---|
| 7 | 39.00 | 41.54 | 16.96 | | 2.5 |
| 8 | 39.92 | 41.23 | 16.84 | 2.01 | |
| 9 | 34.49 | 43.03 | 17.58 | | 4.9 |
| 10 | 36.30 | 42.42 | 17.32 | 3.96 | |

| | | | | | |
|---|---|---|---|---|---|
| Diol 1 = 2,3-dihydroxypropyl methacrylate Diol 2 = 5,6-dihydroxyhexyl methacrylate | | | | | |

Table 6 shows the net compositions of the working examples and comparative examples. The monomer components will add up to 100%. As the residual monomer content in the retrieved polymers is significantly below 1%, the net compositions of the polymers correspond to the used monomer compositions.

**Table 6: Net compositions of the boronic ester-modified polyalkyl (meth)acrylates A and the diol-functionalized polyalkyl (meth)acrylate B.**

| **Example #** | **BMA [%]** | **LMA [%]** | **SMA [%]** | **MAA [%]** |
|---|---|---|---|---|
| 1a | 34.61 | 46.43 | 18.96 | |
| 2a | 26.85 | 51.94 | 21.21 | |
| 5a | 26.85 | 51.94 | 21.21 | |
| 3a | 34.19 | 45.86 | 18.73 | 1.22 |
| 4a | 26.20 | 50.69 | 20.71 | 2.40 |
| 6a | 34.19 | 45.86 | 18.73 | 1.22 |
| 1b | 34.19 | 45.86 | 18.73 | 1.22 |
| 2b | 26.20 | 50.69 | 20.71 | 2.40 |
| 5b | 26.20 | 50.69 | 20.71 | 2.40 |

The properties of the boronic ester-modified polyalkyl (meth)acrylates **A** and the diol-functionalized polyalkyl (meth)acrylate **B** are presented in the following Table 7.

**Table 7: Properties of theboronic ester-modified polyalkyl (meth)acrylates A and the diol-functionalized polyalkyl (meth)acrylate B.**

| **Example #** | **Type of polymer** | **Amount of AMBER [mol%]** | **Amount of diol [mol%]** |
|---|---|---|---|
| 1c | AMBER graft | 2.5 | -- |
| 2c | AMBER graft | 5 | -- |
| 3b | AMBER copolymer | 2.5 | -- |
| 4b | AMBER copolymer | 5 | -- |
| 5c | AMBER graft | 5 | -- |
| 6c | AMBER graft | 2.5 | -- |
| 7 | Diol 2 | -- | 2.5 |
| 8 | Diol 1 | -- | 2.5 |
| 9 | Diol 2 | -- | 5 |
| 10 | Diol 1 | -- | 5 |

The resulting polymers were characterized by their molecular weight and PDI. The results are shown in the following Table 8.

**Table 8: Results of polymer characterization.**

| **Example #** | **Type of polymer** | **M_{w} [g/mol]** | **Mₙ [g/mol]** | **PDI** |
|---|---|---|---|---|
| 1c | AMBER graft | 234,000 | 68,600 | 3.5 |
| 2c | AMBER graft | 486,000 | 63,400 | 5.6 |
| 3b | AMBER copolymer | 111,000 | 55,200 | 2.0 |
| 4b | AMBER copolymer | 110,000 | 53,500 | 2.1 |
| 5c | AMBER graft | 268,000 | 51,200 | 5.2 |
| 6c | AMBER graft | 234,000 | 68,600 | 3.5 |
| 7 | Diol 2 | 165,000 | 54,100 | 3.1 |
| 8 | Diol 1 | 192,000 | 61,000 | 3.2 |
| 9 | Diol 2 | 187,000 | 55,100 | 3.4 |
| 10 | Diol 1 | 191,000 | 63,400 | 3.0 |

The weight-average molecular weights are in the range of 110,000 g/mol (Example 4b) and 486,000 g/mol (Example 2c). The number-average molecular weights are in the range of 51,200 g/mol (Example 5c) and 68,600 g/mol (Examples 1c and 6c).

The thickening efficiency of a VI improver is specified by its KV100 (kinematic viscosity at 100°C) at a given treat rate.

The single polymers were dissolved in a base oil and the retrieved solutions were characterized by their KV40, KV100 and VI. The results are shown in the following Table 9.

**Table 9: Evaluation of compositions comprising 5% polymer in Yubase 4+ as base oil.**

| **Example #** | **Functional group** | **KV40 [mm²/s]** | **KV100 [mm²/s]** | **VI** |
|---|---|---|---|---|
| 1c | AMBER | 8.56 | 34.25 | 244 |
| 2c | AMBER | 10.92 | 43.31 | 256 |
| 3b | AMBER | 7.17 | 29.17 | 225 |
| 4b | AMBER | 6.98 | 28.51 | 222 |
| 5c | AMBER | 8.07 | 33.39 | 229 |
| 6c | AMBER | 8.59 | 34.31 | 244 |
| 7 | Diol 2 | 7.47 | 29.57 | 237 |
| 8 | Diol 1 | 7.83 | 30.74 | 243 |
| 9 | Diol 2 | 7.32 | 29.30 | 232 |
| 10 | Diol 1 | 7.33 | 29.88 | 226 |

It can be seen that the KV40-values are between 6 and 11 mm²/s, the KV100-values are between 28 and 35 mm²/s and the viscosity indices are in the range of 222 (Example 4) and 256 (Example 2).

To show the associative effect of the polymers, mixtures comprising equal parts of an AMBER polymer and a diol-polymer, compositions comprising 5% of a 1:1 polymer mixture in a base oil were prepared and, subsequently, KV40, KV100 and viscosity indices were measured.

The corresponding values are outlined in the following Table 10.

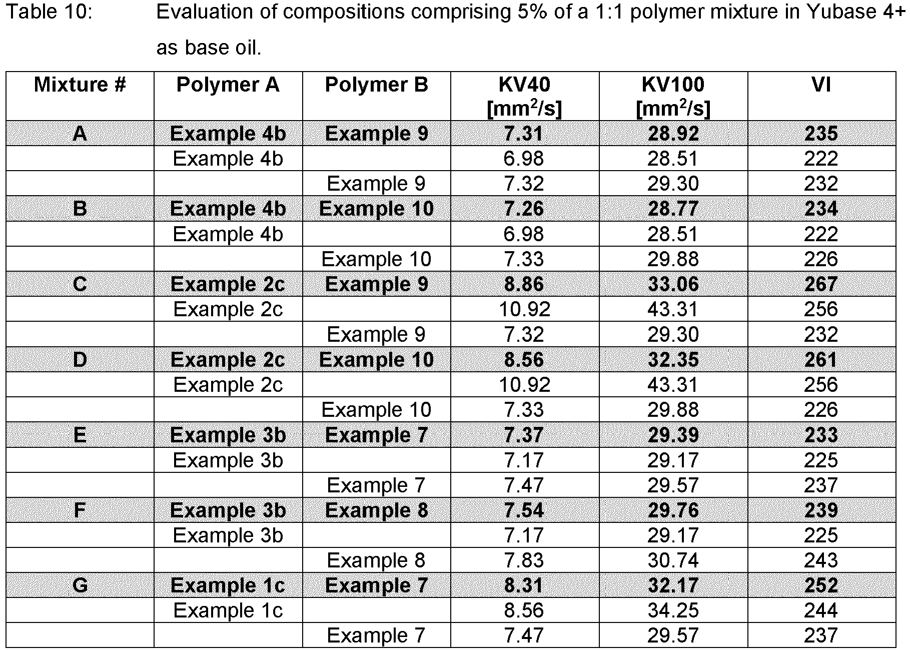

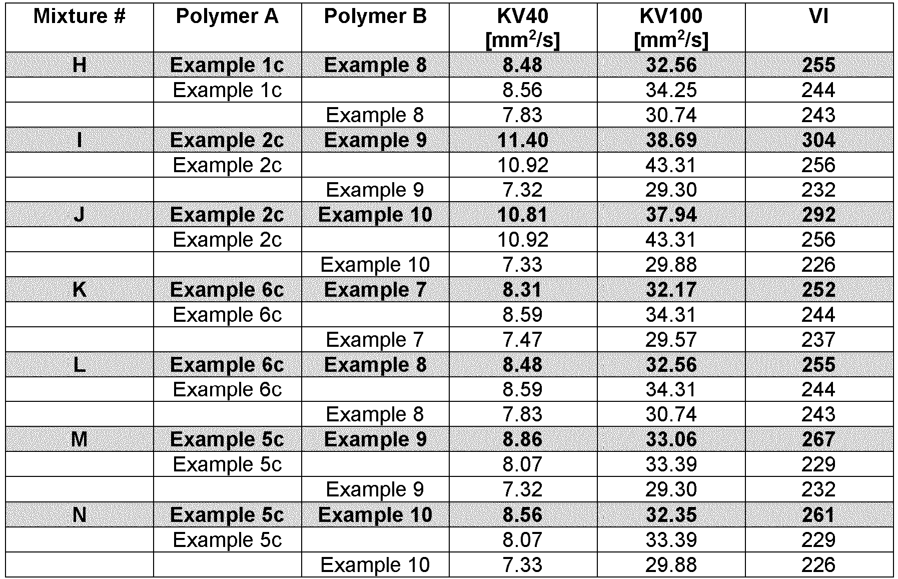

Table 10 shows that synergistic effects were found for increasing the VI of polymer solutions. The VI of the 1:1 mixture of the polymers was increased versus the VI of the single polymer solutions (see Figure 1). The overall polymer concentration was the same in all solutions.

## Claims

1. Boronic ester-modified polyalkyl (meth)acrylates **A**, comprising 2 mol% to 6 mol% of maleic acid anhydride, and 2 mol% to 6 mol% of an aminophenylboronic acid ester of general formula (I) 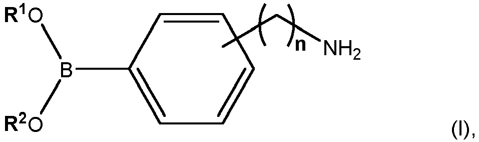 wherein n denotes an integer from 0 to 12, **R¹** and **R²** are independently selected from the group consisting of hydrogen and C1-12 alkyl, or **R¹** together with **R²** form a ring of general formula (lla) 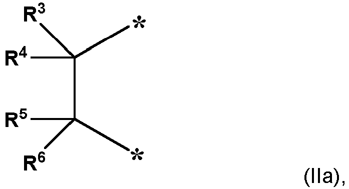 wherein **R³, R⁴, R⁵** and **R⁶** are independently selected from the group consisting of H and C1-12 alkyl and the stars "*" represent the bonds to the oxygen atoms, or
**R¹** together with **R²** form a ring of general formula (IIb) 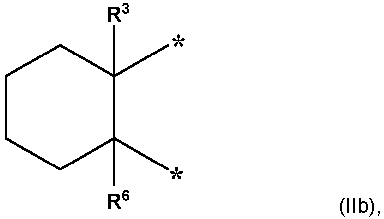 wherein **R³** and **R⁶** are independently selected from the group consisting of H and C1-12 alkyl and the stars "*" represent the bonds to the oxygen atoms, or
**R¹** together with **R²** form a ring of general formula (llc) 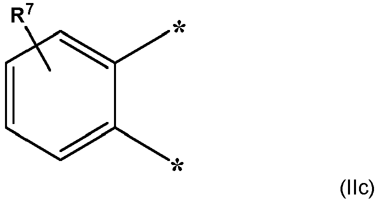 wherein **R⁷** denotes a hydrogen atom or C1-4 alkyl and the stars "*" represent the bonds to the oxygen atoms.

2. Boronic ester-modified polyalkyl (meth)acrylates **A**, comprising:
(a1) 15% to 40% by weight of C1-4 alkyl (meth)acrylates, preferably selected from methyl methacrylate and butyl methacrylate, more preferably butyl methacrylate;
(a2) 45% to 80% by weight of C10-30 alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates;
(a3) 0% to 20% by weight of comonomers;
(a4) 1% to 3% by weight of copolymerized or grafted maleic acid anhydride; and
(a5) 2% to 6% by weight of an aminophenylboronic acid ester of general formula (I) 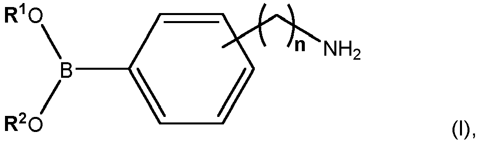 wherein n denotes an integer from 0 to 12, **R¹** and **R²** are independently selected from the group consisting of hydrogen and C1-12 alkyl, or **R¹** together with **R²** form a ring of general formula (lla) 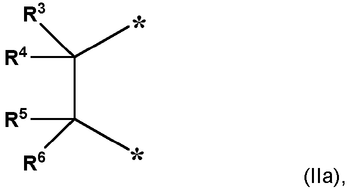 wherein **R³, R⁴, R⁵** and **R⁶** are independently selected from the group consisting of H and C1-12 alkyl and the stars "*" represent the bonds to the oxygen atoms, or
**R¹** together with **R²** form a ring of general formula (IIb) 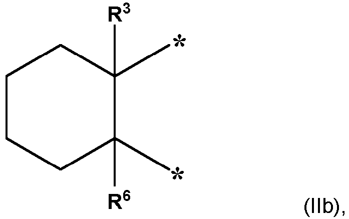 wherein **R³** and **R⁶** are independently selected from the group consisting of H and C1-12 alkyl and the stars "*" represent the bonds to the oxygen atoms, or
**R¹** together with **R²** form a ring of general formula (llc) 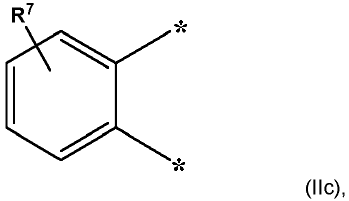 wherein **R⁷** denotes a hydrogen atom or C1-4 alkyl and the stars "*" represent the bonds to the oxygen atoms.

3. Boronic ester-modified polyalkyl (meth)acrylates **A** according to claim 2, wherein the C10-30 alkyl (meth)acrylates (b) are a mixture of C12-15 alkyl (meth)acrylates and C16-20 alkyl (meth)acrylates in a weight ratio of 2:1 to 3:1.

4. Boronic ester-modified polyalkyl (meth)acrylates **A** according to any one of claims 1 to 3, wherein in general formula (I) n denotes an integer 1 or 2 and **R¹** together with **R²** form a ring of general formula (IIa) 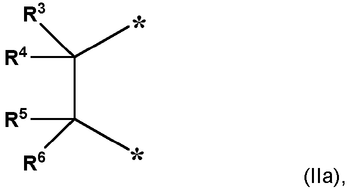 wherein **R³** and **R⁶** are independently selected from the group consisting of H and C1-3 alkyl, **R⁴** and **R⁵** are independently selected from the group consisting of H and C1-12 alkyl and the stars "*" represent the bonds to the oxygen atoms.

5. Boronic ester-modified polyalkyl (meth)acrylates **A** according to any one of claims 1 to 4, wherein the aminophenylboronic acid ester of general formula (I) is selected from the group consisting of 3-aminophenylboronic acid pinacol ester, 4-aminophenylboronic acid pinacol ester, 3-aminophenylboronic acid 1,2-dihydroxybenzene ester, 4-aminophenylboronic acid 1,2-dihydroxybenzene ester, 3-aminophenylboronic acid 1,2-dihydroxycyclohexyl ester and 4-aminophenylboronic acid 1,2-dihydroxycyclohexyl ester, preferably 3-aminophenylboronic acid pinacol ester and 4-aminophenylboronic acid pinacol ester, more preferably 4-aminophenylboronic acid pinacol ester.

6. Boronic ester-modified polyalkyl (meth)acrylates **A** according to any one of claims 1 to 5, wherein the weight-average molecular weight is in the range of 50,000 to 800,000 g/mol, preferably in the range of 100,000 to 600,000 g/mol, determined by gel permeation chromatography (GPC) using polymethyl methacrylate calibration standards according to DIN 55672-1.

7. Boronic ester-modified polyalkyl (meth)acrylates **A** according to any one of claims 1 to 6, wherein the maleic acid anhydride is grafted.

8. Boronic ester-modified polyalkyl (meth)acrylates **A** according to claim 7, consisting of a base polymer **A1** and units **A2** that are grafted thereon, wherein the base polymer **A1** comprises:
(a1) 15% to 40% by weight of C1-4 alkyl (meth)acrylates, preferably selected from methyl methacrylate and butyl methacrylate, more preferably butyl methacrylate;
(a2) 45% to 80% by weight of C10-30 alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates; and
(a3) 0% to 20% by weight of comonomers;
the amount of each component (a) to (c) being based on the total composition of the boronic ester-modified polyalkyl (meth)acrylates **A**; and
the grafted units **A2** comprise repeating units prepared from:
(a4) 1% to 3% by weight of copolymerized or grafted maleic acid anhydride; and
(a5) 2% to 6% by weight of an aminophenylboronic acid ester of general formula (I) 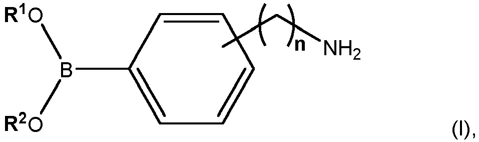 wherein n denotes an integer from 0 to 12, **R¹** and **R²** are independently selected from the group consisting of hydrogen and C1-12 alkyl, or **R¹** together with **R²** form a ring of general formula (lla) 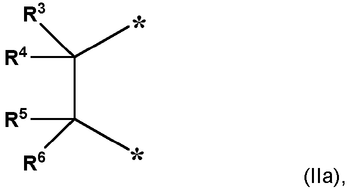 wherein **R³, R⁴, R⁵** and **R⁶** are independently selected from the group consisting of H and C1-12 alkyl and the stars "*" represent the bonds to the oxygen atoms, or
**R¹** together with **R²** form a ring of general formula (IIb) 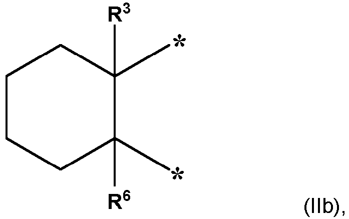 wherein **R³** and **R⁶** are independently selected from the group consisting of H and C1-12 alkyl and the stars "*" represent the bonds to the oxygen atoms, or
**R¹** together with **R²** form a ring of general formula (llc) 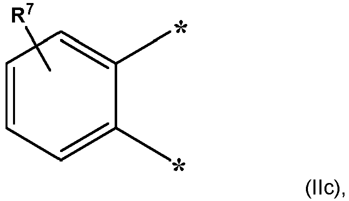 wherein **R⁷** denotes a hydrogen atom or C1-4 alkyl and the stars "*" represent the bonds to the oxygen atoms,
the amount of each component (d) and (e) being based on the total composition of the boronic ester-modified polyalkyl (meth)acrylates **A**.

9. Use of boronic ester-modified polyalkyl (meth)acrylates **A** according to any one of claims 1 to 8 to prepare association-related thickeners.

10. Additive composition, comprising:
(A) 40% to 60% by weight of a base oil; and
(B) 40% to 60% by weight of a boronic ester-modified polyalkyl (meth)acrylate **A**, comprising:
(a1) 15% to 40% by weight of C1-4 alkyl (meth)acrylates, preferably selected from methyl methacrylate and butyl methacrylate, more preferably butyl methacrylate;
(a2) 45% to 80% by weight of C₁₀₋₃₀-alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates;
(a3) 0% to 20% by weight of comonomers;
(a4) 1% to 3% by weight of maleic acid anhydride; and
(a5) 2% to 6% by weight of an aminophenylboronic acid ester of general formula (I) 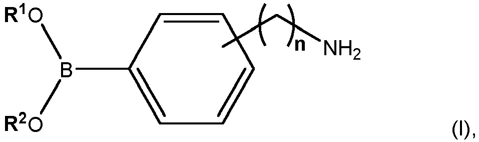 wherein n denotes an integer from 0 to 12, **R¹** and **R²** are independently selected from the group consisting of hydrogen and C1-12 alkyl, or **R¹** together with **R²** form a ring of general formula (lla) 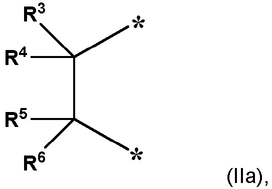 wherein **R³, R⁴, R⁵** and **R⁶** are independently selected from the group consisting of H and C1-12 alkyl and the stars "_{*}" represent the bonds to the oxygen atoms, or
**R¹** together with **R²** form a ring of general formula (IIb) 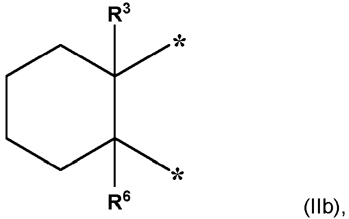 wherein **R³** and **R⁶** are independently selected from the group consisting of H and C1-12 alkyl and the stars "*" represent the bonds to the oxygen atoms, or
**R¹** together with **R²** form a ring of general formula (llc) 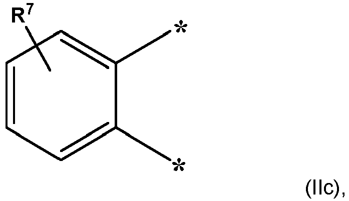 wherein **R⁷** denotes a hydrogen atom or C1-4 alkyl and the stars "_{*}" represent the bonds to the oxygen atoms.

11. Additive composition according to claim 10, wherein the base oil is selected from the Group consisting of API Group I oils, API Group II oils, API Group III oils, API Group IV oils, API Group V oils and mixtures thereof; preferably API Group III oils and mixtures thereof.

12. A mixture comprising equal amounts of:
(A) a boronic ester-modified polyalkyl (meth)acrylate **A**, comprising:
(a1) 15% to 40% by weight of C1-4 alkyl (meth)acrylates, preferably selected from methyl methacrylate and butyl methacrylate, more preferably butyl methacrylate;
(a2) 45% to 80% by weight of C10-30 alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates;
(a3) 0% to 20% by weight of comonomers;
(a4) 1% to 3% by weight of maleic acid anhydride; and
(a5) 2% to 6% by weight of an aminophenylboronic acid ester of general formula (I) 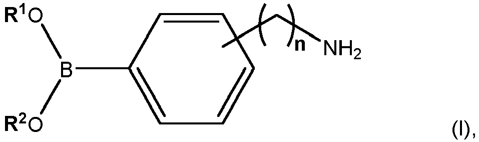 wherein **n** denotes an integer from 0 to 12, **R¹** and **R²** are independently selected from the group consisting of hydrogen and C1-12 alkyl, or **R¹** together with **R²** form a ring of general formula (lla) 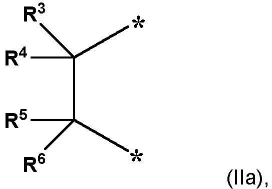 wherein **R³, R⁴, R⁵** and **R⁶** are independently selected from the group consisting of H and C1-12 alkyl and the stars "_{*}" represent the bonds to the oxygen atoms, or
**R¹** together with **R²** form a ring of general formula (IIb) 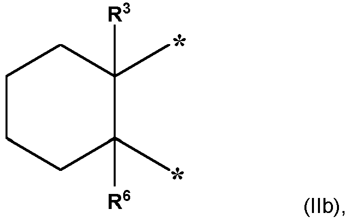 wherein R**³** and **R⁶** are independently selected from the group consisting of H and C1-12 alkyl and the stars "_{*}" represent the bonds to the oxygen atoms, or
**R¹** together with **R²** form a ring of general formula (llc) 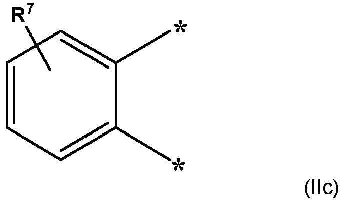 wherein **R⁷** denotes a hydrogen atom or C1-4 alkyl and the stars "_{*}" represent the bonds to the oxygen atoms; and
(B) a diol-functionalized polyalkyl (meth)acrylate **B** comprising the following monomers:
(b1) 15% to 40% by weight of C1-4 alkyl (meth)acrylates, preferably selected from methyl methacrylate and butyl methacrylate, more preferably butyl methacrylate;
(b2) 45% to 80% by weight of C₁₀₋₃₀-alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates;
(b3) 0% to 20% by weight of comonomers; and
(b4) 1% to 6% by weight of a diol selected from the group consisting of 2,3-dihydroxypropyl methacrylate and 5,6-dihydroxyhexyl methacrylate.

13. The mixture according to claim 12, wherein component (a5) of the boronic ester-modified polyalkyl (meth)acrylate **A** and component (b4) of the diol-functionalized polyalkyl (meth)acrylate **B** are present in equal amounts of 2 mol% to 6 mol%.

14. Use of a mixture according to claim 12 or 13, comprising equal amounts of boronic ester-modified polyalkyl (meth)acrylates **A** and a diol-functionalized polyalkyl (meth)acrylates **B** to prepare association-related thickeners.

15. Method for preparing association-related thickeners, comprising the steps of:
(i) preparing a boronic ester-modified polyalkyl (meth)acrylate **A** according to any one of claims 1 to 8;
(ii) preparing a diol-functionalized polyalkyl (meth)acrylates **B** comprising the following monomers:
(b1) 15% to 40% by weight of C1-4 alkyl (meth)acrylates, preferably selected from methyl methacrylate and butyl methacrylate, more preferably butyl methacrylate;
(b2) 45% to 80% by weight of C₁₀₋₃₀-alkyl (meth)acrylates, preferably a mixture of C12-15 alkyl (meth)acrylates and C16-20 alkyl (meth)acrylates, more preferably a mixture of C12-14 alkyl (meth)acrylates and C16-18 alkyl (meth)acrylates;
(b3) 0% to 20% by weight of comonomers; and
(b4) 1% to 6% by weight of a diol selected from the group consisting of 2,3-dihydroxypropyl methacrylate and 5,6-dihydroxyhexyl methacrylate; and
(iii) mixing the boronic ester-modified polyalkyl (meth)acrylate **A** of step (i) with the diol-functionalized polyalkyl (meth)acrylate **B** of step (ii) to receive a thermo-associative thickener.

## Patentansprüche

1. Boronsäureestermodifizierte Polyalkyl(meth)acrylate A, umfassend 2 Mol-% bis 6 Mol-% Maleinsäureanhydrid und 2 Mol-% bis 6 Mol-% eines Aminophenylboronsäureesters der allgemeinen Formel (I) 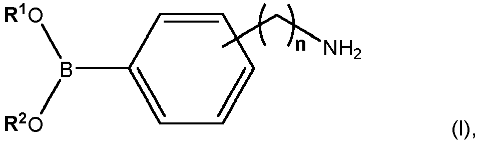 wobei n eine ganze Zahl von 0 bis 12 bedeutet, R¹ und R² unabhängig aus der Gruppe bestehend aus Wasserstoff und C1-12-Alkyl ausgewählt sind oder R¹ zusammen mit R² einen Ring der allgemeinen Formel (IIa) bildet 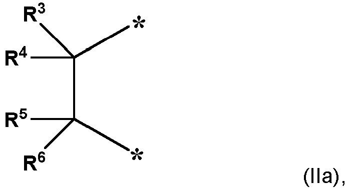 wobei R³, R⁴, R⁵ und R⁶ unabhängig aus der Gruppe bestehend aus H und C1-12-Alkyl ausgewählt sind und die Sterne "*" die Bindungen an die Sauerstoffatome darstellen, oder
R¹ zusammen mit R² einen Ring der allgemeinen Formel (IIb) bildet 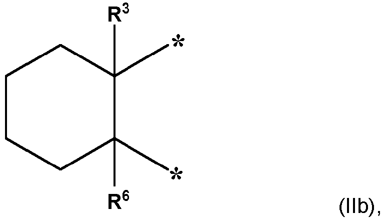 wobei R³ und R⁶ unabhängig aus der Gruppe bestehend aus H und C1-12-Alkyl ausgewählt sind und die Sterne "*" die Bindungen an die Sauerstoffatome darstellen, oder
R¹ zusammen mit R² einen Ring der allgemeinen Formel (IIc) bildet 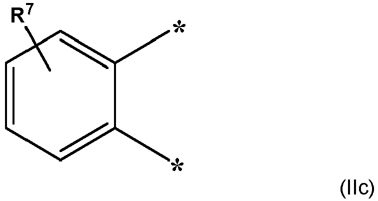 wobei R⁷ ein Wasserstoffatom oder C1-4-Alkyl bedeutet und die Sterne "*" die Bindungen zu den Sauerstoffatomen darstellen.

2. Boronsäureestermodifizierte Polyalkyl(meth)acrylate A, umfassend:
(a1) 15 bis 40 Gew.-% C1-4-Alkyl(meth)acrylate, vorzugsweise ausgewählt aus Methylmethacrylat oder Butylmethacrylat, weiter bevorzugt Butylmethacrylat;
(a2) 45 bis 80 Gew.-% C10-30-Alkyl(meth)acrylate, vorzugsweise ein Gemisch von C12-15-Alkyl(meth)acrylaten und C16-20-Alkyl(meth)acrylaten, weiter bevorzugt ein Gemisch von C12-14-Alkyl(meth)acrylaten und C16-18-Alkyl(meth)acrylaten;
(a3) 0 bis 20 Gew.-% Comonomere;
(a4) 1 bis 3 Gew.-% copolymerisiertes oder gepfropftes Maleinsäureanhydrid; und
(a5) 2 bis 6 Gew.-% eines Aminophenylboronsäureesters der allgemeinen Formel (I) 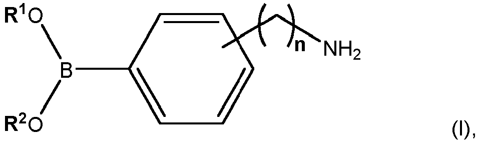 wobei n eine ganze Zahl von 0 bis 12 bedeutet, R¹ und R² unabhängig aus der Gruppe bestehend aus Wasserstoff und C1-12-Alkyl ausgewählt sind oder R¹ zusammen mit R² einen Ring der allgemeinen Formel (IIa) bildet 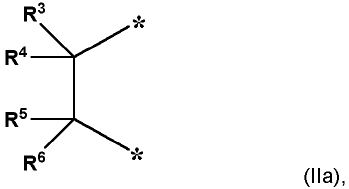 wobei R³, R⁴, R⁵ und R⁶ unabhängig aus der Gruppe bestehend aus H und C1-12-Alkyl ausgewählt sind und die Sterne "*" die Bindungen an die Sauerstoffatome darstellen, oder
R¹ zusammen mit R² einen Ring der allgemeinen Formel (IIb) bildet 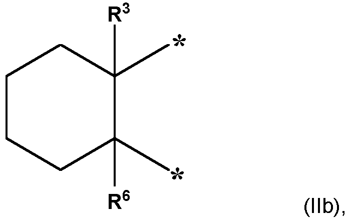 wobei R³ und R⁶ unabhängig aus der Gruppe bestehend aus H und C1-12-Alkyl ausgewählt sind und die Sterne "*" die Bindungen an die Sauerstoffatome darstellen, oder
R¹ zusammen mit R² einen Ring der allgemeinen Formel (IIc) bildet 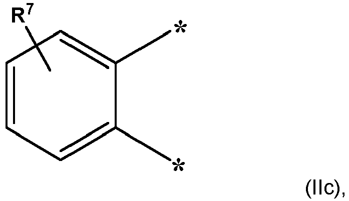 wobei R⁷ ein Wasserstoffatom oder C1-4-Alkyl bedeutet und die Sterne "*" die Bindungen zu den Sauerstoffatomen darstellen.

3. Boronsäureestermodifizierte Polyalkyl(meth)acrylate A nach Anspruch 2, wobei es sich bei den C10-30-Alkyl(meth)acrylaten (b) um ein Gemisch von C12-15-Alkyl(Meth)acrylaten und C16-20-Alkyl(meth)acrylaten in einem Gewichtsverhältnis von 2:1 bis 3:1 handelt.

4. Boronsäureestermodifizierte Polyalkyl(meth)acrylate A nach einem der Ansprüche 1 bis 3, wobei in der allgemeinen Formel (I) n eine ganze Zahl 1 oder 2 bedeutet und R¹ zusammen mit R² einen Ring der allgemeinen Formel (IIa) bildet 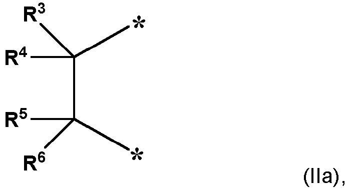 wobei R³ und R⁶ unabhängig aus der Gruppe bestehend aus H und C1-3-Alkyl ausgewählt sind, R⁴ und R⁵ unabhängig aus der Gruppe bestehend aus H und C1-12-Alkyl ausgewählt sind und die Sterne "*" die Bindungen an die Sauerstoffatome darstellen.

5. Boronsäureestermodifizierte Polyalkyl(meth)acrylate A nach einem der Ansprüche 1 bis 4, wobei der Aminophenylboronsäureester der allgemeinen Formel (I) aus der Gruppe bestehend aus 3-Aminophenylboronsäurepinacolester, 4-Aminophenylboronsäurepinacolester, 3-Aminophenylboronsäure-1,2-dihydroxybenzolester, 4-Aminophenylboronsäure-1,2-dihydroxybenzolester, 3-Aminophenylboronsäure-1,2-dihydroxycyclohexylester und 4-Aminophenylboronsäure-1,2-dihydroxycyclohexylester, vorzugsweise 3-Aminophenylboronsäurepinacolester und 4-Aminophenylboronsäurepinacolester, weiter bevorzugt 4-Aminophenylboronsäurepinacolester, ausgewählt ist.

6. Boronsäureestermodifizierte Polyalkyl(meth)acrylate A nach einem der Ansprüche 1 bis 5, wobei das gewichtsmittlere Molekulargewicht im Bereich von 50.000 bis 800.000 g/mol, vorzugsweise im Bereich von 100.000 bis 600.000 g/mol, bestimmt durch Gelpermeationschromatographie (GPC) unter Verwendung von Polymethylmethacrylat-Kalibrierstandards nach DIN 55672-1, liegt.

7. Boronsäureestermodifizierte Polyalkyl(meth)acrylate A nach einem der Ansprüche 1 bis 6, wobei das Maleinsäureanhydrid gepfropft ist.

8. Boronsäureestermodifizierte Polyalkyl(meth)acrylate A nach Anspruch 7, bestehend aus einem Basispolymer A1 und darauf aufgepfropften Einheiten A2, wobei das Basispolymer A1 Folgendes umfasst:
(a1) 15 bis 40 Gew.-% C1-4-Alkyl(meth)acrylate, vorzugsweise ausgewählt aus Methylmethacrylat oder Butylmethacrylat, weiter bevorzugt Butylmethacrylat;
(a2) 45 bis 80 Gew.-% C10-30-Alkyl(meth)acrylate, vorzugsweise ein Gemisch von C12-15-Alkyl(meth)acrylaten und C16-20-Alkyl(meth)acrylaten, weiter bevorzugt ein Gemisch von C12-14-Alkyl(meth)acrylaten und C16-18-Alkyl(meth)acrylaten; und
(a3) 0 bis 20 Gew.-% Comonomere;
wobei sich die Menge jeder Komponente (a) bis (c) auf die Gesamtzusammensetzung der boronsäureestermodifizierten Polyalkyl(meth)acrylate A bezieht; und
die aufgepfropften Einheiten A2 Wiederholungseinheiten umfassen, die aus Folgendem hergestellt sind:
(a4) 1 bis 3 Gew.-% copolymerisiertes oder gepfropftes Maleinsäureanhydrid; und
(a5) 2 bis 6 Gew.-% eines Aminophenylboronsäureesters der allgemeinen Formel (I) 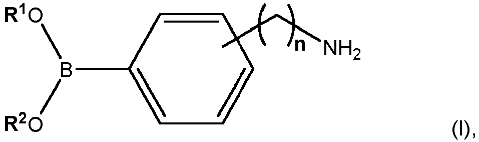 wobei n eine ganze Zahl von 0 bis 12 bedeutet, R¹ und R² unabhängig aus der Gruppe bestehend aus Wasserstoff und C1-12-Alkyl ausgewählt sind oder R¹ zusammen mit R² einen Ring der allgemeinen Formel (IIa) bildet 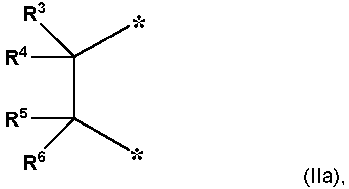 wobei R³, R⁴, R⁵ und R⁶ unabhängig aus der Gruppe bestehend aus H und C1-12-Alkyl ausgewählt sind und die Sterne "*" die Bindungen an die Sauerstoffatome darstellen, oder
R¹ zusammen mit R² einen Ring der allgemeinen Formel (IIb) bildet 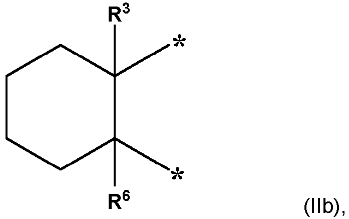 wobei R³ und R⁶ unabhängig aus der Gruppe bestehend aus H und C1-12-Alkyl ausgewählt sind und die Sterne "*" die Bindungen an die Sauerstoffatome darstellen, oder
R¹ zusammen mit R² einen Ring der allgemeinen Formel (IIc) bildet 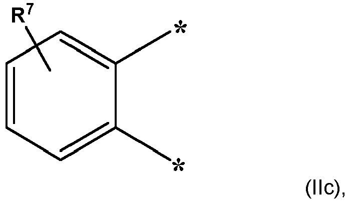 wobei R⁷ ein Wasserstoffatom oder C1-4-Alkyl bedeutet und die Sterne "*" die Bindungen zu den Sauerstoffatomen darstellen,
wobei sich die Menge jeder Komponente (d) und (e) auf die Gesamtzusammensetzung der boronsäureestermodifizierten Polyalkyl(meth)acrylate A bezieht.

9. Verwendung von boronsäureestermodifizierten Polyalkyl (meth) acrylaten A nach einem der Ansprüche 1 bis 8 zur Herstellung von assoziativen Verdickern.

10. Additivzusammensetzung, umfassend:
(A) 40 bis 60 Gew.-% eines Grundöls; und
(B) 40 bis 60 Gew.-% eines boronsäureestermodifizierten Polyalkyl(meth)acrylats A, umfassend:
(a1) 15 bis 40 Gew.-% C1-4-Alkyl(meth)acrylate, vorzugsweise ausgewählt aus Methylmethacrylat oder Butylmethacrylat, weiter bevorzugt Butylmethacrylat;
(a2) 45 bis 80 Gew.-% C₁₀₋₃₀-Alkyl (meth) acrylate, vorzugsweise ein Gemisch von C12-15-Alkyl(meth)acrylaten und C16-20-Alkyl(meth)acrylaten, weiter bevorzugt ein Gemisch von C12-14-Alkyl(meth)acrylaten und C16-18-Alkyl(meth)acrylaten;
(a3) 0 bis 20 Gew.-% Comonomere;
(a4) 1 bis 3 Gew.-% Maleinsäureanhydrid; und
(a5) 2 bis 6 Gew.-% eines Aminophenylboronsäureesters der allgemeinen Formel (I) 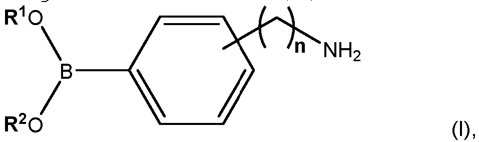 wobei n eine ganze Zahl von 0 bis 12 bedeutet, R¹ und R² unabhängig aus der Gruppe bestehend aus Wasserstoff und C1-12-Alkyl ausgewählt sind oder R¹ zusammen mit R² einen Ring der allgemeinen Formel (IIa) bildet 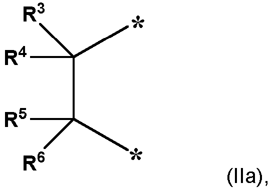 wobei R³, R⁴, R⁵ und R⁶ unabhängig aus der Gruppe bestehend aus H und C1-12-Alkyl ausgewählt sind und die Sterne "*" die Bindungen an die Sauerstoffatome darstellen, oder
R¹ zusammen mit R² einen Ring der allgemeinen Formel (IIb) bildet 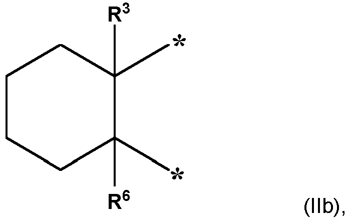 wobei R³ und R⁶ unabhängig aus der Gruppe bestehend aus H und C1-12-Alkyl ausgewählt sind und die Sterne "*" die Bindungen an die Sauerstoffatome darstellen, oder
R¹ zusammen mit R² einen Ring der allgemeinen Formel (IIc) bildet 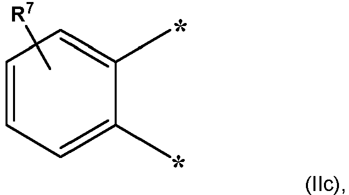 wobei R⁷ ein Wasserstoffatom oder C1-4-Alkyl bedeutet und die Sterne "*" die Bindungen zu den Sauerstoffatomen darstellen.

11. Additivzusammensetzung nach Anspruch 10, wobei das Grundöl aus der Gruppe bestehend aus Ölen der API-Gruppe I, Ölen der API-Gruppe II, Ölen der API-Gruppe III, Ölen der API-Gruppe IV, Ölen der API-Gruppe V und Mischungen davon, vorzugsweise Ölen der API-Gruppe III und Mischungen davon, ausgewählt ist.

12. Mischung, umfassend gleiche Mengen von:
(A) einem boronsäureestermodifizierten Polyalkyl(meth)acrylat A, umfassend:
(a1) 15 bis 40 Gew.-% C1-4-Alkyl(meth)acrylate, vorzugsweise ausgewählt aus Methylmethacrylat oder Butylmethacrylat, weiter bevorzugt Butylmethacrylat;
(a2) 45 bis 80 Gew.-% C10-30-Alkyl(meth)acrylate, vorzugsweise ein Gemisch von C12-15-Alkyl(meth)acrylaten und C16-20-Alkyl(meth)acrylaten, weiter bevorzugt ein Gemisch von C12-14-Alkyl(meth)acrylaten und C16-18-Alkyl(meth)acrylaten;
(a3) 0 bis 20 Gew.-% Comonomere;
(a4) 1 bis 3 Gew.-% Maleinsäureanhydrid; und
(a5) 2 bis 6 Gew.-% eines Aminophenylboronsäureesters der allgemeinen Formel (I) 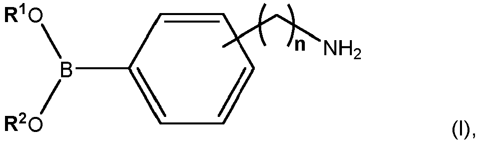 wobei n eine ganze Zahl von 0 bis 12 bedeutet, R¹ und R² unabhängig aus der Gruppe bestehend aus Wasserstoff und C1-12-Alkyl ausgewählt sind oder R¹ zusammen mit R² einen Ring der allgemeinen Formel (IIa) bildet 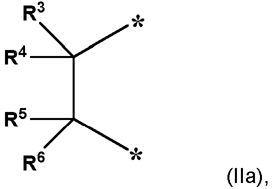 wobei R³, R⁴, R⁵ und R⁶ unabhängig aus der Gruppe bestehend aus H und C1-12-Alkyl ausgewählt sind und die Sterne "*" die Bindungen an die Sauerstoffatome darstellen, oder
R¹ zusammen mit R² einen Ring der allgemeinen Formel (IIb) bildet 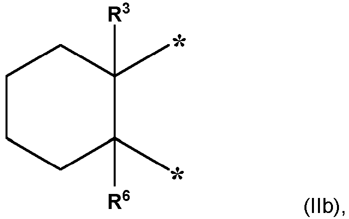 wobei R³ und R⁶ unabhängig aus der Gruppe bestehend aus H und C1-12-Alkyl ausgewählt sind und die Sterne "*" die Bindungen an die Sauerstoffatome darstellen, oder
R¹ zusammen mit R² einen Ring der allgemeinen Formel (IIc) bildet 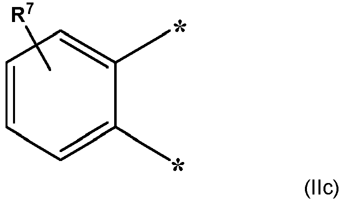 wobei R⁷ ein Wasserstoffatom oder C1-4-Alkyl bedeutet und die Sterne "*" die Bindungen zu den Sauerstoffatomen darstellen; und
(B) ein diolfunktionalisiertes Polyalkyl(meth)acrylat B, umfassend die folgenden Monomere:
(b1) 15 bis 40 Gew.-% C1-4-Alkyl(meth)acrylate, vorzugsweise ausgewählt aus Methylmethacrylat oder Butylmethacrylat, weiter bevorzugt Butylmethacrylat;
(b2) 45 bis 80 Gew.-% C₁₀₋₃₀-Alkyl (meth) acrylate, vorzugsweise ein Gemisch von C12-15-Alkyl(meth)acrylaten und C16-20-Alkyl(meth)acrylaten, weiter bevorzugt ein Gemisch von C12-14-Alkyl(meth)acrylaten und C16-18-Alkyl(meth)acrylaten;
(b3) 0 bis 20 Gew.-% Comonomere; und
(b4) 1 bis 6 Gew.-% eines Diols, das aus der Gruppe bestehend aus 2,3-Dihydroxypropylmethacrylat und 5,6-Dihydroxyhexylmethacrylat ausgewählt ist.

13. Mischung nach Anspruch 12, wobei Komponente (a5) des boronsäureestermodifizierten Polyalkyl(meth)acrylats A und Komponente (b4) des diolfunktionalisierten Polyalkyl(meth)acrylats B in gleichen Mengen von 2 Mol-% bis 6 Mol-% vorliegen.

14. Verwendung einer Mischung nach Anspruch 12 oder 13, die gleiche Mengen von boronsäureestermodifizierten Polyalkyl(meth)acrylaten A und diolfunktionalisierten Polyalkyl(meth)acrylaten B umfasst, zur Herstellung von assoziativen Verdickern.

15. Verfahren zur Herstellung von assoziativen Verdickern, umfassend die Schritte:
(i) Herstellen eines boronsäureestermodifizierten Polyalkyl(meth)acrylats A nach einem der Ansprüche 1 bis 8;
(ii) Herstellen eines diolfunktionalisierten Polyalkyl(meth)acrylats B, umfassend die folgenden Monomere:
(b1) 15 bis 40 Gew.-% C1-4-Alkyl(meth)acrylate, vorzugsweise ausgewählt aus Methylmethacrylat oder Butylmethacrylat, weiter bevorzugt Butylmethacrylat;
(b2) 45 bis 80 Gew.-% C₁₀₋₃₀-Alkyl (meth) acrylate, vorzugsweise ein Gemisch von C12-15-Alkyl(meth)acrylaten und C16-20-Alkyl(meth)acrylaten, weiter bevorzugt ein Gemisch von C12-14-Alkyl(meth)acrylaten und C16-18-Alkyl(meth)acrylaten;
(b3) 0 bis 20 Gew.-% Comonomere; und
(b4) 1 bis 6 Gew.-% eines Diols, das aus der Gruppe bestehend aus 2,3-Dihydroxypropylmethacrylat und 5,6-Dihydroxyhexylmethacrylat ausgewählt ist; und
(iii) Mischen des boronsäureestermodifizierten Polyalkyl(meth)acrylats A aus Schritt (i) mit dem diolfunktionalisierten Polyalkyl(meth)acrylat B aus Schritt (ii) zum Erhalt eines thermo-assoziativen Verdickers.

## Revendications

1. Poly((méth)acrylates d'alkyle) modifiés par un ester boronique A, comprenant 2 % en moles à 6 % en moles d'anhydride d'acide maléique et 2 % en moles à 6 % en moles d'un ester d'acide aminophénylboronique de formule générale (I) 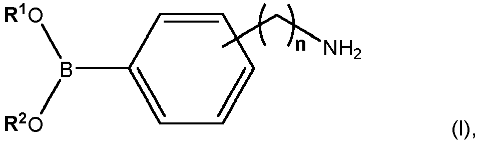 dans laquelle n désigne un entier de 0 à 12, R¹ et R² sont indépendamment choisis dans le groupe constitué par hydrogène et alkyle en C1-12, ou R¹ conjointement avec R² forment un cycle de formule générale (IIa) 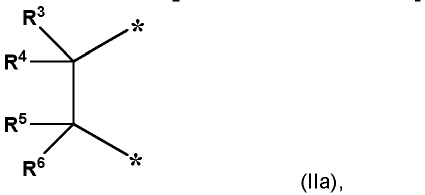 dans laquelle R³, R⁴, R⁵ et R⁶ sont indépendamment choisis dans le groupe constitué par H et alkyle en C1-12 et les étoiles « * » représentent les liaisons aux atomes d'oxygène, ou
R¹ conjointement avec R² forment un cycle de formule générale (IIb) 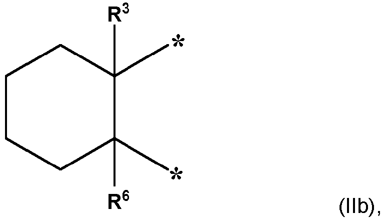 dans laquelle R³ et R⁶ sont indépendamment choisis dans le groupe constitué par H et alkyle en C1-12 et les étoiles « * » représentent les liaisons aux atomes d'oxygène, ou
R¹ conjointement avec R² forment un cycle de formule générale (IIc) 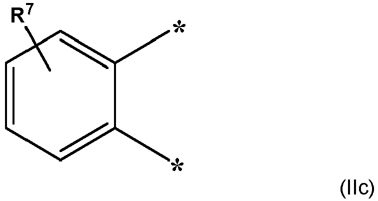 dans laquelle R⁷ désigne un atome d'hydrogène ou un groupe alkyle en C1-4 et les étoiles « * » représentent les liaisons aux atomes d'oxygène.

2. Poly((méth)acrylates d'alkyle) modifiés par un ester boronique A, comprenant :
(a1) 15 % à 40 % en poids de (méth)acrylates d'alkyle en C1-4, de préférence choisis parmi le méthacrylate de méthyle et le méthacrylate de butyle, plus préférablement le méthacrylate de butyle ;
(a2) 45 % à 80 % en poids de (méth)acrylates d'alkyle en C10-30, de préférence un mélange de (méth)acrylates d'alkyle en C12-15 et de (méth)acrylates d'alkyle en C16-20, plus préférablement un mélange de (méth)acrylates d'alkyle en C12-14 et de (méth)acrylates d'alkyle en C16-18 ;
(a3) 0 % à 20 % en poids de comonomères ;
(a4) 1 % à 3 % en poids d'anhydride d'acide maléique copolymérisé ou greffé ; et
(a5) 2 % à 6 % en poids d'un ester d'acide aminophénylboronique de formule générale (I) 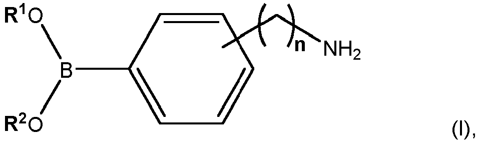 dans laquelle n désigne un entier de 0 à 12, R¹ et R² sont indépendamment choisis dans le groupe constitué par hydrogène et alkyle en C1-12, ou R¹ conjointement avec R² forment un cycle de formule générale (IIa) 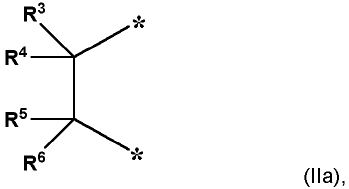 dans laquelle R³, R⁴, R⁵ et R⁶ sont indépendamment choisis dans le groupe constitué par H et alkyle en C1-12 et les étoiles « * » représentent les liaisons aux atomes d'oxygène, ou
R¹ conjointement avec R² forment un cycle de formule générale (IIb) 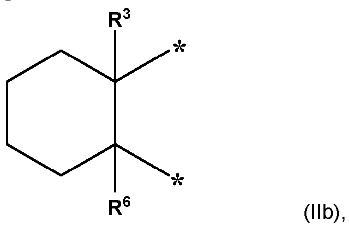 dans laquelle R³ et R⁶ sont indépendamment choisis dans le groupe constitué par H et alkyle en C1-12 et les étoiles « * » représentent les liaisons aux atomes d'oxygène, ou
R¹ conjointement avec R² forment un cycle de formule générale (IIc) 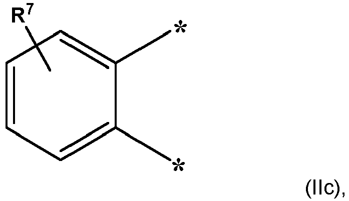 dans laquelle R⁷ désigne un atome d'hydrogène ou un groupe alkyle en C1-4 et les étoiles « * » représentent les liaisons aux atomes d'oxygène.

3. Poly((méth)acrylates d'alkyle) modifiés par un ester boronique A selon la revendication 2, dans lesquels les (méth)acrylates d'alkyle en C10-30 (b) sont un mélange de (méth)acrylates d'alkyle en C12-15 et de (méth)acrylates d'alkyle en C16-20 en un rapport pondéral de 2:1 à 3:1.

4. Poly((méth)acrylates d'alkyle) modifiés par un ester boronique A selon l'une quelconque des revendications 1 à 3, dans lesquels, dans la formule générale (I), n désigne un entier 1 ou 2 et R¹ conjointement avec R² forment un cycle de formule générale (IIa) 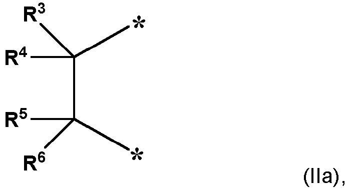 dans laquelle R³ et R⁶ sont indépendamment choisis dans le groupe constitué par H et alkyle en C1-3, R⁴ et R⁵ sont indépendamment choisis dans le groupe constitué par H et alkyle en C1-12 et les étoiles « * » représentent les liaisons aux atomes d'oxygène.

5. Poly((méth)acrylates d'alkyle) modifiés par un ester boronique A selon l'une quelconque des revendications 1 à 4, dans lesquels l'ester d'acide aminophénylboronique de formule générale (I) est choisi dans le groupe constitué par l'ester de pinacol d'acide 3-aminophénylboronique, l'ester de pinacol d'acide 4-aminophénylboronique, l'ester de 1,2-dihydroxybenzène d'acide 3-aminophénylboronique, l'ester de 1,2-dihydroxybenzène d'acide 4-aminophénylboronique, l'ester de 1,2-dihydroxycyclohexyle d'acide 3-aminophénylboronique et l'ester de 1,2-dihydroxycyclohexyle d'acide 4-aminophénylboronique, de préférence l'ester de pinacol d'acide 3-aminophénylboronique et l'ester de pinacol d'acide 4-aminophénylboronique, plus préférablement l'ester de pinacol d'acide 4-aminophénylboronique.

6. Poly( (méth)acrylates d'alkyle) modifiés par un ester boronique A selon l'une quelconque des revendications 1 à 5, dans lesquels le poids moléculaire moyen en poids est dans la plage de 50 000 à 800 000 g/mole, de préférence dans la plage de 100 000 à 600 000 g/mole, déterminé par chromatographie à perméation de gel (CPG) en utilisant des étalons de poly(méthacrylate de méthyle) selon la norme DIN 55672-1.

7. Poly((méth)acrylates d'alkyle) modifiés par un ester boronique A selon l'une quelconque des revendications 1 à 6, dans lesquels l'anhydride d'acide maléique est greffé.

8. Poly((méth)acrylates d'alkyle) modifiés par un ester boronique A selon la revendication 7, constitués d'un polymère de base A1 et de motifs A2 qui sont greffés sur celui-ci, dans lesquels le polymère de base A1 comprend :
(a1) 15 % à 40 % en poids de (méth)acrylates d'alkyle en C1-4, de préférence choisis parmi le méthacrylate de méthyle et le méthacrylate de butyle, plus préférablement le méthacrylate de butyle ;
(a2) 45 % à 80 % en poids de (méth)acrylates d'alkyle en C10-30, de préférence un mélange de (méth)acrylates d'alkyle en C12-15 et de (méth)acrylates d'alkyle en C16-20, plus préférablement un mélange de (méth)acrylates d'alkyle en C12-14 et de (méth)acrylates d'alkyle en C16-18 ; et
(a3) 0 % à 20 % en poids de comonomères ;
la quantité de chaque composant (a) à (c) étant basée sur la composition totale des poly((méth)acrylates d'alkyle) modifiés par un ester boronique A ; et
les motifs greffés A2 comprennent des motifs répétitifs préparés à partir de :
(a4) 1 % à 3 % en poids d'anhydride d'acide maléique copolymérisé ou greffé ; et
(a5) 2 % à 6 % en poids d'un ester d'acide aminophénylboronique de formule générale (I) 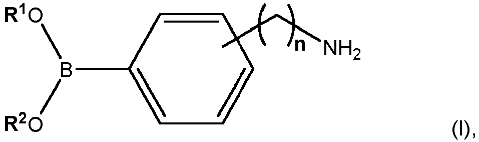 dans laquelle n désigne un entier de 0 à 12, R¹ et R² sont indépendamment choisis dans le groupe constitué par hydrogène et alkyle en C1-12, ou R¹ conjointement avec R² forment un cycle de formule générale (IIa) 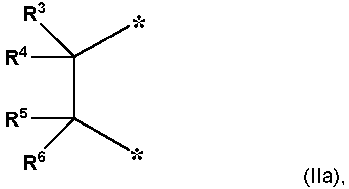 dans laquelle R³, R⁴, R⁵ et R⁶ sont indépendamment choisis dans le groupe constitué par H et alkyle en C1-12 et les étoiles « * » représentent les liaisons aux atomes d'oxygène, ou
R¹ conjointement avec R² forment un cycle de formule générale (IIb) 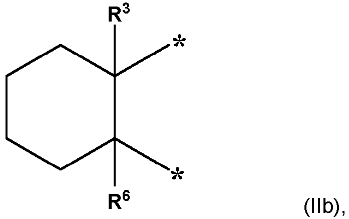 dans laquelle R³ et R⁶ sont indépendamment choisis dans le groupe constitué par H et alkyle en C1-12 et les étoiles « * » représentent les liaisons aux atomes d'oxygène, ou
R¹ conjointement avec R² forment un cycle de formule générale (IIc) 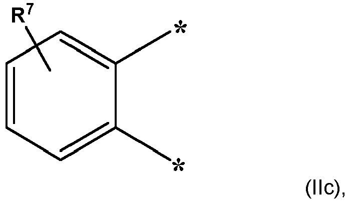 dans laquelle R⁷ désigne un atome d'hydrogène ou alkyle en C1-4 et les étoiles « * » représentent les liaisons aux atomes d'oxygène,
la quantité de chaque composant (d) et (e) est basée sur la composition totale des poly((méth)acrylates d'alkyle) modifiés par un ester boronique A.

9. Utilisation de poly((méth)acrylates d'alkyle) modifiés par un ester boronique A selon l'une quelconque des revendications 1 à 8 pour la préparation d'épaississants liés par association.

10. Composition d'additif, comprenant :
(A) 40 % à 60 % en poids d'une huile de base ; et
(B) 40 % à 60 % en poids d'un poly((méth)acrylate d'alkyle) modifié par un ester boronique A, comprenant :
(a1) 15 % à 40 % en poids de (méth)acrylates d'alkyle en C1-4, de préférence choisis parmi le méthacrylate de méthyle et le méthacrylate de butyle, plus préférablement le méthacrylate de butyle ;
(a2) 45 % à 80 % en poids de(méth)acrylates d'alkyle en C₁₀₋₃₀, de préférence un mélange de (méth)acrylates d'alkyle en C12-15 et de (méth)acrylates d'alkyle en C16-20, plus préférablement un mélange de (méth)acrylates d'alkyle en C12-14 et de (méth)acrylates d'alkyle en C16-18 ;
(a3) 0 % à 20 % en poids de comonomères ;
(a4) 1 % à 3 % en poids d'anhydride d'acide maléique ; et
(a5) 2 % à 6 % en poids d'un ester d'acide aminophénylboronique de formule générale (I) 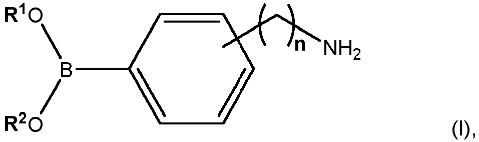 dans laquelle n désigne un entier de 0 à 12, R¹ et R² sont indépendamment choisis dans le groupe constitué par hydrogène et alkyle en C1-12, ou R¹ conjointement avec R² forment un cycle de formule générale (IIa) 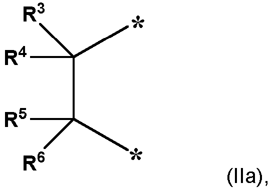 dans laquelle R³, R⁴, R⁵ et R⁶ sont indépendamment choisis dans le groupe constitué par H et alkyle en C1-12 et les étoiles « * » représentent les liaisons aux atomes d'oxygène, ou
R¹ conjointement avec R² forment un cycle de formule générale (IIb) 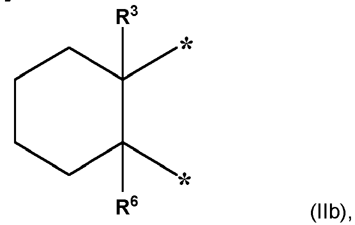 dans laquelle R³ et R⁶ sont indépendamment choisis dans le groupe constitué par H et alkyle en C1-12 et les étoiles « * » représentent les liaisons aux atomes d'oxygène, ou
R¹ conjointement avec R² forment un cycle de formule générale (IIc) 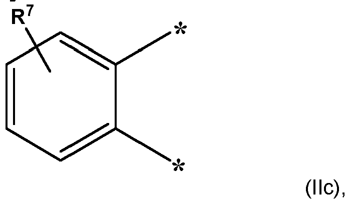 dans laquelle R⁷ désigne un atome d'hydrogène ou un groupe alkyle en C1-4 et les étoiles « * » représentent les liaisons aux atomes d'oxygène.

11. Composition d'additif selon la revendication 10, dans laquelle l'huile de base est choisie dans le groupe constitué par les huiles du groupe I de l'API, les huiles du groupe II de l'API, les huiles du groupe III de l'API, les huiles du groupe IV de l'API, les huiles du groupe V de l'API et leurs mélanges ; de préférence les huiles du groupe III de l'API et leurs mélanges.

12. Mélange comprenant des quantités égales de :
(A) un poly((méth) acrylate d'alkyle) modifié par un ester boronique A, comprenant :
(a1) 15 % à 40 % en poids de (méth)acrylates d'alkyle en C1-4, de préférence choisis parmi le méthacrylate de méthyle et le méthacrylate de butyle, plus préférablement le méthacrylate de butyle ;
(a2) 45 % à 80 % en poids de (méth)acrylates d'alkyle en C10-30, de préférence un mélange de (méth)acrylates d'alkyle en C12-15 et de (méth)acrylates d'alkyle en C16-20, plus préférablement un mélange de (méth)acrylates d'alkyle en C12-14 et de (méth)acrylates d'alkyle en C16-18 ;
(a3) 0 % à 20 % en poids de comonomères ;
(a4) 1 % à 3 % en poids d'anhydride d'acide maléique ; et
(a5) 2 % à 6 % en poids d'un ester d'acide aminophénylboronique de formule générale (I) 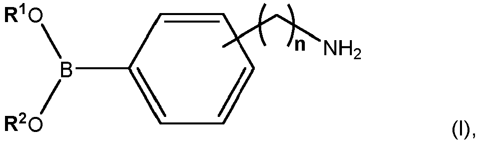 dans laquelle n désigne un entier de 0 à 12, R¹ et R² sont indépendamment choisis dans le groupe constitué par hydrogène et alkyle en C1-12, ou R¹ conjointement avec R² forment un cycle de formule générale (IIa) 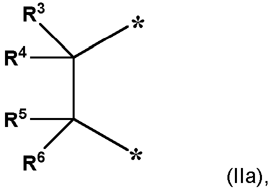 dans laquelle R³, R⁴, R⁵ et R⁶ sont indépendamment choisis dans le groupe constitué par H et alkyle en C1-12 et les étoiles « * » représentent les liaisons aux atomes d'oxygène, ou
R¹ conjointement avec R² forment un cycle de formule générale (IIb) 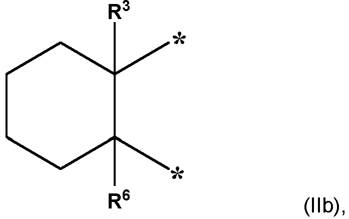 dans laquelle R³ et R⁶ sont indépendamment choisis dans le groupe constitué par H et alkyle en C1-12 et les étoiles « * » représentent les liaisons aux atomes d'oxygène, ou
R¹ conjointement avec R² forment un cycle de formule générale (IIc) 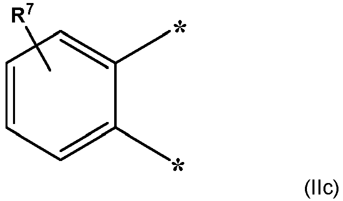 dans laquelle R⁷ désigne un atome d'hydrogène ou alkyle en C1-4 et les étoiles « * » représentent les liaisons aux atomes d'oxygène ; et
(B) un poly((méth)acrylate d'alkyle) fonctionnalisé par un diol B, comprenant les monomères suivants :
(b1) 15 % à 40 % en poids de (méth)acrylates d'alkyle en C1-4, de préférence choisis parmi le méthacrylate de méthyle et le méthacrylate de butyle, plus préférablement le méthacrylate de butyle ;
(b2) 45 % à 80 % en poids de (méth)acrylates d'alkyle en C₁₀₋₃₀, de préférence un mélange de (méth)acrylates d'alkyle en C12-15 et de (méth)acrylates d'alkyle en C16-20, plus préférablement un mélange de (méth)acrylates d'alkyle en C12-14 et de (méth)acrylates d'alkyle en C16-18 ;
(b3) 0 % à 20 % en poids de comonomères ; et
(b4) 1 % à 6 % en poids d'un diol choisi dans le groupe constitué par le méthacrylate de 2,3-dihydroxypropyle et le méthacrylate de 5,6-dihydroxyhexyle.

13. Mélange selon la revendication 12, dans lequel le composant (a5) du poly((méth)acrylate d'alkyle) modifié par un ester boronique A et le composant (b4) du poly((méth)acrylate d'alkyle) fonctionnalisé par un diol B sont présents en quantités égales de 2 % en moles à 6 % en moles.

14. Utilisation d'un mélange selon la revendication 12 ou 13, comprenant des quantités égales de poly((méth)acrylates d'alkyle) modifiés par un ester boronique A et de poly((méth)acrylates d'alkyle) fonctionnalisés par un diol B pour la préparation d'épaississants liés par association.

15. Procédé de préparation d'épaississants liés par association, comprenant les étapes de :
(i) préparation d'un poly((méth)acrylate d'alkyle) modifié par un ester boronique A selon l'une quelconque des revendications 1 à 8 ;
(ii) préparation de poly((méth)acrylates d'alkyle) fonctionnalisés par un diol B comprenant les monomères suivants :
(b1) 15 % à 40 % en poids de (méth)acrylates d'alkyle en C1-4, de préférence choisis parmi le méthacrylate de méthyle et le méthacrylate de butyle, plus préférablement le méthacrylate de butyle ;
(b2) 45 % à 80 % en poids de(méth)acrylates d'alkyle en C₁₀₋₃₀, de préférence un mélange de (méth)acrylates d'alkyle en C12-15 et de (méth)acrylates d'alkyle en C16-20, plus préférablement un mélange de (méth)acrylates d'alkyle en C12-14 et de (méth)acrylates d'alkyle en C16-18 ;
(b3) 0 % à 20 % en poids de comonomères ; et
(b4) 1 % à 6 % en poids d'un diol choisi dans le groupe constitué par le méthacrylate de 2,3-dihydroxypropyle et le méthacrylate de 5,6-dihydroxyhexyle ; et
(iii) mélange du poly((méth)acrylate d'alkyle) modifié par un ester boronique A de l'étape (i) avec le poly((méth)acrylate d'alkyle) fonctionnalisé par un diol B de l'étape (ii) pour recevoir un épaississant thermo-associatif.
